(19) Europäisches Patentamt
European Patent Office
Office européen des brevets

(11) **EP 4 629 542 A1**

(12) **EUROPEAN PATENT APPLICATION**
published in accordance with Art. 153(4) EPC

(43) Date of publication:
08.10.2025 Bulletin 2025/41

(21) Application number: 23899692.0

(22) Date of filing: 09.11.2023

(51) International Patent Classification (IPC):
*H04L 5/00* (2006.01)

(52) Cooperative Patent Classification (CPC):
H04L 5/00; H04W 56/00; H04W 72/044;
H04W 84/06

(86) International application number:
PCT/CN2023/130642

(87) International publication number:
WO 2024/120112 (13.06.2024 Gazette 2024/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 04.12.2022 CN 202211544398
10.01.2023 CN 202310037732

(71) Applicant: Datang Mobile Communications
Equipment Co., Ltd.
Beijing 100085 (CN)

(72) Inventors:
• HAN, Bo
Beijing 100085 (CN)
• MIAO, Deshan
Beijing 100085 (CN)
• KANG, Shaoli
Beijing 100085 (CN)

(74) Representative: **Studio Torta S.p.A.**
Via Viotti, 9
10121 Torino (IT)

(54) **INFORMATION TRANSMISSION METHOD AND APPARATUS, AND NETWORK-SIDE DEVICE AND TERMINAL**

(57) The present disclosure provides an information transmission method and device, and a network device and UE. The method includes: within a beam scanning cycle comprising one or more radio frames, sending, by a network device, an SSB in different beam directions; wherein an index of the SSB within the beam scanning cycle includes one or more combinations of partial bits of a system frame number of a radio frame where the SSB is located, a half-frame identifier of the radio frame where the SSB is located, an SSB index, and PBCH information bit.

within a beam scanning cycle composed of one or more radio frames, sending, by the network device, an SSB in different beam directions; where an index of the SSB within the beam scanning cycle includes one or more combinations of partial bits of a system frame number of a radio frame where the SSB is located, a half-frame identifier of the radio frame where the SSB is located, an SSB index, and PBCH information bit

301

**FIG. 3**

EP 4 629 542 A1

**Description**

The present application claims the priority of Chinese Application No. 202211544398.6 filed on December 4, 2022, entitled "information transmission method and device, network device and user equipment", the disclosure of which are incorporated in its entirety by reference herein. Meanwhile, the present application claims the priority of Chinese Application No. 202310037732.7 filed on January 10, 2023, entitled "information transmission method and device, network device and user equipment", the disclosure of which are incorporated in its entirety by reference herein.

**TECHNICAL FIELD**

The present disclosure relates to the field of communication technologies, and in particular to an information transmission method and device, network device and user equipment.

**BACKGROUND**

For the fifth-generation mobile communication technology (5G), the combination of the 5G technology and the satellite communication technology has been put on the agenda. Traditional multi-beam satellites evenly distribute bandwidth and power to each spot beam; but due to uneven distribution and demand of ground services, a resource utilization rate of the satellite system is not high, and an actual communication capacity is greatly reduced. In order to improve the resource utilization efficiency of satellite beams and increase a transmission capacity of satellite communications, a phased array agile beam technology, also known as beam hopping technology, is proposed based on spot beams. This approach allows service areas of a beam to continuously vary across an entire coverage zone, and enables all service areas to be covered in a time-division manner. Each service area covered by the beam is called a beam position, and the mode of covering different service areas in different slots forms a beam hopping pattern.

In the satellite communication system, a coverage range of one satellite is relatively large, tens of thousands of kilometers. Due to power limitations, a beam width will not be too wide, thus there will be hundreds or thousands of beam positions in the coverage zone of such a satellite. One satellite beam may need to scan hundreds of beam positions. In order to shorten the beam scanning time, multiple beams may be required to scan the coverage zone of the satellite. According to the existing 5G new radio (NR) specification, one beam scanning cannot support more than 64 beam positions; and when operating in low-frequency bands, the maximum beam positions supported by the beam scanning are even fewer, and multiple beam scanning scenarios are not supported. Satellite communication systems based on 5G, 5G-advanced and other communication systems need to enhance beam management and beam position indication methods for scenarios with multiple scanning beams and massive beam positions.

**SUMMARY**

An object of embodiments of the present disclosure is to provide an information transmission method and device, network device and user equipment, which can solve the problem of how to meet access requirements of the satellite communication systems based on 5G, 5G-advanced and other communication systems.

In order to achieve the above object, in a first aspect, one embodiment of the present disclosure provides an information transmission method, including:

within a beam scanning cycle comprising one or more radio frames, sending, by a network device, an SSB in different beam directions; wherein an index of the SSB within the beam scanning cycle includes one or more combinations of partial bits of a system frame number of a radio frame where the SSB is located, a half-frame identifier of the radio frame where the SSB is located, an SSB index, and PBCH information bit.

Within a beam scanning cycle comprising one or more radio frames, sending, by a network device, an SSB in different beam directions, includes:

in the beam scanning cycle, sending, by the network device, SSBs, by using one or multiple hopping beams at different beam positions; wherein the beam positions represent beam directions of the hopping beams, and an SSB pattern for each hopping beam remains identical within each SSB transmission cycle.

The PBCH information bit includes one or more of the following information:

    reserved bit in a master information block (MIB);
    new bits in the MIB;
    reserved bit in a PBCH payload;
    new bits in the PBCH payload;
    reconfiguration of an existing bit field in the PBCH payload.

The beam scanning cycle comprises multiple frame structures, and the frame structure includes one or more consecutive radio frames;
the frame structure identifier of the frame structure where the SSB is located is represented by at least one of partial bit of the system frame number of the radio frame where the SSB is located and the PBCH information bit.

The frame structure identifier of the frame structure where the SSB is located is represented by all bits of high k bits starting from an m-th least significant bit of the system frame number of the radio frame where the SSB is located, or the frame structure identifier of the frame structure where the SSB is located is represented by partial bits of the high k bits and the PBCH information bits; an identifier of the half frame of the radio frame where the SSB is located is represented by 1 bit, and the SSB index is represented by n bits; then,

$$m = \log_2 \left\lceil \frac{T_{frame}}{10} \right\rceil + 1, \quad k = \log_2 \left\lceil \frac{N}{L \times \frac{T_{frame}}{T_{SSB}}} \right\rceil, \quad n = \log_2 \left\lceil L \right\rceil,$$

where $T_{frame}$ represents frame structure period; $N$ represents a total number of beam positions to be scanned; $L$ represents a maximum number of beam positions scanned by hopping beam within an SSB transmission cycle; $T_{SSB}$ represents SSB transmission cycle for beam hopping.

One of the PBCH information bit, and some bits of the system frame number of the radio frame where the SSB is located, is used to indicate a position of the radio frame where the SSB is located in the frame structure;
or,
the position of the radio frame where the SSB is located in the frame structure is agreed upon by a protocol

The frame structure period is indicated by a protocol agreement or by the PBCH information bit.

A reserved bit in an MIB or a reserved bit in a PBCH payload indicates that the index of the SSB in the beam scanning cycle is an SSB index under extended beam position.

An SSB maximum index value indicated by the PBCH information bit is an SSB maximum index value of an existing protocol or an SSB maximum index value supported under extended beam position.

When one hopping beam is used to send SSB at different beam positions within a frame structure, the hopping beam scans different beam positions in a time-division manner within a corresponding SSB transmission cycle.

When multiple beam-hopping beams are used to send SSB at different beam positions within a frame structure, the multiple beam-hopping partitions scan different beam positions in time-division manner within respective corresponding SSB transmission cycles.

The multiple hopping beams are indicated by one of the following:

different frequency bands;
different bandwidth parts;
different cell identifiers;
reserved bit in the MIB;
new bits in MIB;
reserved bit in the PBCH payload;
new bits in the PBCH payload;
reconfiguration of an existing bit field in the PBCH payload.

Bit information used for the index of the SSB within the beam scanning cycle is not scrambled during a first scrambling process.

A system frame number at which the hopping beam starts scanning in each beam scanning cycle meets a same condition.

The number of beam positions is indicated by a system information block SIB message.

In a second aspect, one embodiment of the present disclosure provides an information transmission method, including:

receiving, by a user equipment (UE), a synchronization signal and PBCH blocks (SSB) sent by a network device, in a first beam direction within one or more consecutive radio frames;
parsing information carried by physical broadcast channel (PBCH) in the SSB to obtain target information; wherein the target information includes system frame number (SFN), an identifier of a half frame of a radio frame where the SSB is located, and an SSB index, or the target information includes a system frame number (SFN), an identifier of a half frame of a radio frame where the SSB is located, an SSB index, and a position identifier of a radio frame where the SSB is located in its frame structure;

determining a frame header position of the frame structure where the SSB is located according to the target information;

performing downlink time synchronization according to the frame header position of the frame structure where the SSB is located.

The frame structure includes one or more consecutive radio frames.

A frame structure identifier of the frame structure where the SSB is located is represented by SFN and/or PBCH information bit.

The frame structure identifier of the frame structure where the SSB is located is represented by all bits of high k bits starting from an m-th least significant bit of the system frame number, or the frame structure identifier of the frame structure where the SSB is located is represented by partial bits of the high k bits and the PBCH information bit; then,

$$m=\log_2\left\lceil\frac{T_{frame}}{10}\right\rceil+1\;,\quad k=\log_2\left\lceil\frac{N}{L\times\dfrac{T_{frame}}{T_{SSB}}}\right\rceil\;,\quad n=\log_2\left\lceil L\right\rceil\;,$$

where $T_{frame}$ represents frame structure period; $N$ represents a total number of beam positions to be scanned; $L$ represents a maximum number of beam positions scanned by hopping beam within an SSB transmission cycle; $T_{SSB}$ represents SSB transmission cycle for beam hopping.

The position identifier of the radio frame where the SSB is located in the frame structure is represented by one of the PBCH information bit and partial bits of the SFN;

or, the position identifier of the radio frame where the SSB is located in its frame structure is identified by protocol agreement.

The frame structure period is agreed upon by a protocol or indicated by PBCH information bit.

An SSB maximum index value indicated by the PBCH information bit is an SSB maximum index value of an existing protocol or an SSB maximum index value supported under extended beam position.

A reserved bit in an MIB or a reserved bit in a PBCH payload indicates that an index of the SSB in the beam scanning cycle is an SSB index under extended beam position.

The PBCH information bit includes one or more of the following information:

reserved bit in the MIB;
new bit in the MIB;
reserved bit in the PBCH payload;
new bit in the PBCH payload;
reconfiguration of an existing bit field in the PBCH payload.

The method further includes:

obtaining beam hopping indication information, wherein the beam hopping indication information includes one or more of the following:
different frequency bands;
different bandwidth parts;
different cell identifiers;
reserved bit in the MIB;
new bit in the MIB;
reserved bit in the PBCH payload;
new bit in the PBCH payload;
reconfiguration of an existing bit field in the PBCH payload.

In a third aspect, one embodiment of the present disclosure provides a network device, including: a memory, a transceiver, and a processor; wherein the memory is used to store program instructions; the transceiver is used to send and receive data under the control of the processor; the processor is used to read the program instructions in the memory to execute the information transmission method according to the first aspect.

In a fourth aspect, one embodiment of the present disclosure provides an information transmission device, including:

a sending unit used to, within a beam scanning cycle comprising one or more radio frames, send an SSB in different beam directions; wherein an index of the SSB within the beam scanning cycle includes one or more combinations of partial bits of a system frame number of a radio frame where the SSB is located, a half-frame identifier of the radio frame where the SSB is located, an SSB index, and PBCH information bit.

In a fifth aspect, one embodiment of the present disclosure provides a user equipment (UE), including: a memory, a transceiver, and a processor; wherein the memory is used to store program instructions; the transceiver is used to send and receive data under the control of the processor; the processor is used to read the program instructions in the memory to execute the information transmission method according to the second aspect.

In a sixth aspect, one embodiment of the present disclosure provides an information transmission device, including:

a receiving unit used to receive a synchronization signal and PBCH blocks (SSB) sent by a network device, in a first beam direction within one or more consecutive radio frames;

a parsing unit used to parse information carried by physical broadcast channel (PBCH) in the SSB to obtain target information; wherein the target information includes system frame number (SFN), an identifier of a half frame of a radio frame where the SSB is located, and an SSB index, or the target information includes a system frame number (SFN), an identifier of a half frame of a radio frame where the SSB is located, an SSB index, and a position identifier of a radio frame where the SSB is located in its frame structure;

a first processing unit used to determine a frame header position of the frame structure where the SSB is located according to the target information;

a second processing unit used to perform downlink time synchronization according to the frame header position of the frame structure where the SSB is located.

In a seventh aspect, one embodiment of the present disclosure provides a processor-readable storage medium, including a computer program stored thereon; wherein the computer program is used to cause a processor to execute the information transmission method according to the first aspect, or the information transmission method according to the second aspect.

The technical solution of the present disclosure provides at least the following beneficial effects.

In the technical solution of the embodiments of the present disclosure, within a beam scanning cycle comprising one or more radio frames, a network device sends an SSB in different beam directions; wherein an index of the SSB within the beam scanning cycle includes one or more combinations of partial bits of a system frame number of a radio frame where the SSB is located, a half-frame identifier of the radio frame where the SSB is located, an SSB index, and PBCH information bit. The above technical solution utilizes time extension to support satellite communication systems covering different numbers of beam positions. In addition, as the number of beam positions scanned within the beam scanning cycle increases, a single SSB index can no longer indicate the beam position index. The index of the SSB within the beam scanning cycle in the present disclosure can indicate the beam position index under the extended beam positions of the satellite communication system. The technical solution in the present disclosure can meet access requirements of the satellite communication systems based on 5G, 5G-advanced and other communication systems.

**BRIEF DESCRIPTION OF THE DRAWINGS**

FIG. 1 is a schematic diagram of beam scanning and SSB burst set;
FIG. 2 shows different SSB patterns at different carrier spacings;
FIG. 3 is a first schematic flowchart of an information transmission method according to an embodiment of the present disclosure;
FIG. 4 is a schematic diagram of scanning beam positions with a hopping beam in a polling manner according to an embodiment of the present disclosure;
FIG. 5 is a schematic diagram of mapping SSBs of multiple hopping beams onto multiple BWPs according to an embodiment of the present disclosure;
FIG. 6 is a first schematic diagram of a beam hopping scanning pattern according to an embodiment of the present disclosure;

FIG. 7 is a schematic diagram of bit composition of a beam position index corresponding to the embodiment of FIG. 6;

FIG. 8 is a second schematic diagram of a beam hopping scanning pattern according to an embodiment of the present disclosure;

FIG. 9 is a third schematic diagram of a beam hopping scanning pattern according to an embodiment of the present disclosure;

FIG. 10 is a schematic diagram of bit composition of a beam position index corresponding to the embodiment of FIG. 9;

FIG. 11 is a fourth schematic diagram of a beam hopping scanning pattern according to an embodiment of the present disclosure;

FIG. 12 is a first schematic diagram of bit composition of a beam position index corresponding to the embodiment of FIG. 11;

FIG. 13 is a second schematic diagram of bit composition of a beam position index corresponding to the embodiment of FIG. 11;

FIG. 14 is a fifth schematic diagram of a beam hopping scanning pattern according to an embodiment of the present disclosure;

FIG. 15 is a schematic diagram of bit composition of a beam position index corresponding to the embodiment of FIG. 14;

FIG. 16 is a second schematic flowchart of an information transmission method according to an embodiment of the present disclosure;

FIG. 17 is a block diagram of a network device according to an embodiment of the present disclosure;

FIG. 18 is a first schematic diagram showing modules of an information transmission device according to an embodiment of the present disclosure;

FIG. 19 is a block diagram of a user equipment according to an embodiment of the present disclosure; and

FIG. 20 is a second schematic diagram showing modules of an information transmission device according to an embodiment of the present disclosure.

## DETAILED DESCRIPTION

In the embodiment of the present disclosure, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present disclosure, the term "plurality" refers to two or more than two, and other quantifiers are similar.

The technical solutions in the embodiments of the present disclosure will be clearly and completely described below with reference to the accompanying drawings in the embodiments of the present disclosure. Obviously, the described embodiments are only some embodiments of the present disclosure, rather than all embodiments. Based on the embodiments in the present disclosure, all other embodiments obtained by those of ordinary skill in the art without creative efforts fall within the scope of protection of the present disclosure.

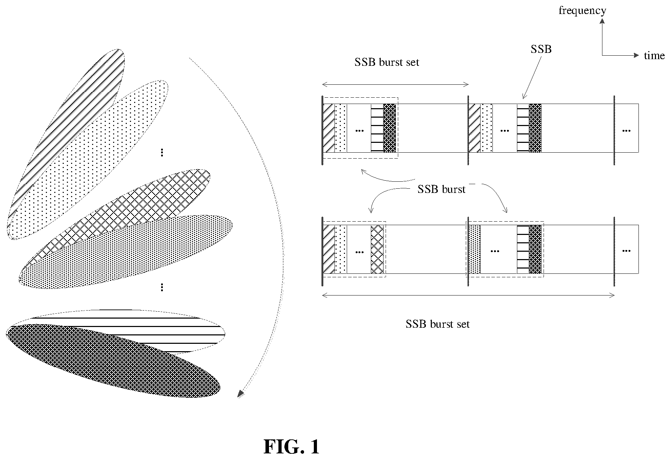

In the 5G NR communication system, due to device limitations and limited beam coverage range, it is necessary to increase the coverage range by beam scanning. Specifically, beam scanning is performed in a time division multiplexing manner. The beam scanning here refers to different beams transmitting initial access channel and signal blocks at different times, so that there will be multiple synchronization signal and PBCH blocks (SSB) in one cycle. FIG. 1 is a schematic diagram of beam scanning and SSB burst set. The left part of FIG. 1 shows spatial domain beam of SSB, and an SSB is sent at each beam position; the right part of FIG. 1 is schematic diagram showing transmission of SSB at different times. Each beam in the left part and time domain SSB in the right part, which are of identical fill patterns, are corresponding to the same SSB. In the 5G NR communication system, one SSB is sent at each beam position (BP), and different beam positions are represented by different SSB indexes. All SSBs in one cycle constitute one SSB burst set.

In the 5G NR communication system, SSB includes primary synchronization signal (PSS), secondary synchronization signal (SSS) and physical broadcast channel (PBCH). The PBCH includes demodulation reference signal (DMRS). One SSB occupies 4 orthogonal frequency division multiplexing (OFDM) symbols in the time domain and 20 physical resource blocks (PRBs) in the frequency domain. PSS and SSS each occupy one symbol, and PBCH occupies two symbols, in the order of PSS-PBCH-SSS+PBCH-PBCH, where the symbol where the SSS is located includes a part of contents of the PBCH.

In the 5G NR communication system, SSB is repeatedly transmitted in the SSB burst set according to the same beam (position) or different beam (positions). All SSBs in one SSB burst set are limited to 5ms, and the maximum number L of SSBs in one SSB burst set in each frequency range is specified as follows:

1. Carrier frequency<3GHz, L=4;
2. Carrier frequency 3GHz~6GHz, L=8;
3. Carrier frequency 6GHz~52.6GHz, L= 64.

Since there will be multiple PSS/SSS in one cycle, different user equipment (UE) may detect PSS/SSS at different symbol positions. Therefore, in the 5G NR communication system, even if the UE detects the PSS/SSS, it still cannot know the frame boundary. Therefore, a base station needs to notify the UE of a sequence index of the SSB in the SSB burst set and a half-frame identifier. The sequence index of the SSB in the SSB burst set is SSB index which is carried by payload and DMRS in the PBCH, and the half-frame identifier is carried by the payload in the PBCH.

Specifically, when L=4 or 8, the SSB index (2 bits or 3 bits) is carried by a DMRS sequence in the PBCH, and the UE can obtain the SSB index without decoding the PBCH. When L=64, the SSB index is 6 bits, and the 3 least significant bits (LSB) of the SSB index are carried by the DMRS sequence in the PBCH, and the 3 most significant bits (MSB) of the SSB index are carried in the content of the PBCH. The UE needs to decode the PBCH to obtain the 3 most significant bits of the SSB.

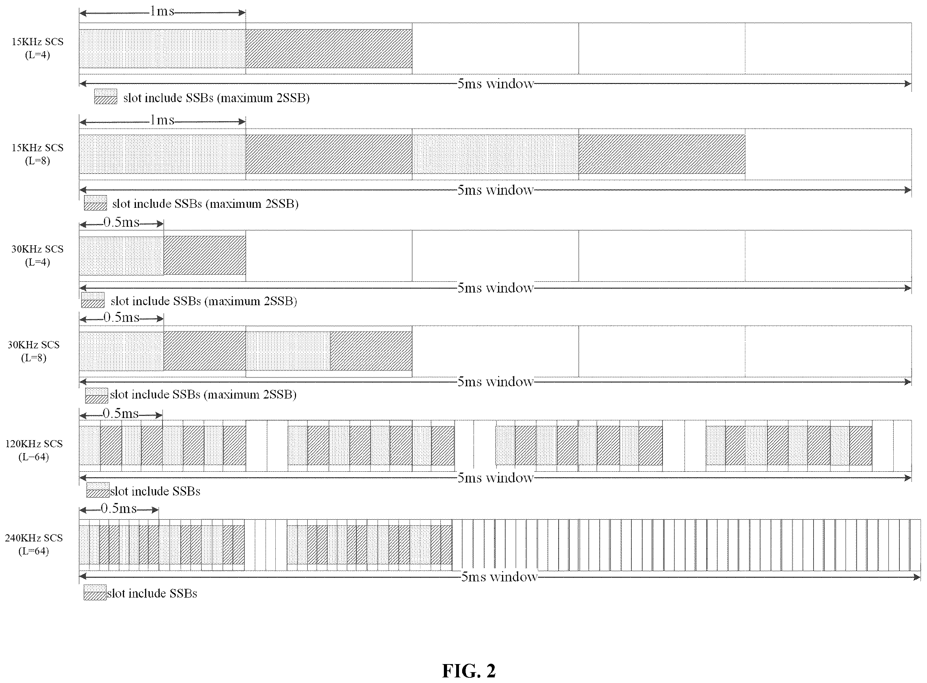

Within 5ms of each transmission SSB burst set, the SSB is sent according to a fixed pattern. The SSB patterns are different under different carrier spacings, as shown in FIG. 2. The UE can obtain slot synchronization and symbol synchronization through the half-frame identifier, SSB index and SSB burst set pattern.

In the 5G NR communication system, one SSB burst set supports five SSB burst set patterns, that is, SSB mapping supports five modes, as shown in Table 1.

Table 1

| mode | SSB SCS (kHz) | index value of a first symbol of SSB in a half-radio frame. | description |
|---|---|---|---|
| A | 15 | $\{2,8\}+14\cdot n$ | carrier frequency$\leq$3GHz, n=0,1 |
| | | | 3GHz< carrier frequency$\leq$6GHz, n=0,1,2,3 |
| B | 30 | $\{4,8,16, 20\}+28\cdot n$ | carrier frequency$\leq$3GHz, n=0 3GHz< carrier frequency$\leq$6GHz, n=0,1 |
| C | 30 | $\{2,8\} + 14\cdot n$ | 1. For FDD with paired spectrum carrier frequency$\leq$3GHz, n=0,1 3GHz< carrier frequency$\leq$6GHz, n=0,1,2,3 2. For TDD with unpaired spectrum: carrier frequency$\leq$1.88GHz, n=0,1 1.88GHz< carrier frequency$\leq$6GHz,n=0,1,2,3 |
| D | 120 | $\{4,8,16, 20\} + 28\cdot n$ | carrier frequency only used for FR2, n=0,1,2,3,5,6,7,8,10,11,12,13,15,16,17,18 |
| E | 240 | $\{8,12,16,20,32,36,40,4$ | carrier frequency only used for FR2-1, n=0,1,2,3,5,6,7,8 |

In the satellite communication system, a coverage range of one satellite is relatively large, tens of thousands of kilometers. Due to power limitations, a beam width will not be too wide, thus there will be hundreds or thousands of beam positions in the coverage zone of such a satellite. One satellite beam may need to scan hundreds of beam positions. In order to shorten the beam scanning time, multiple beams may be required to scan the coverage zone of the satellite. From the above analysis, it can be concluded that in the 5G NR communication systems, the maximum number of beam positions supported by beam scanning is determined by the operating frequency band and subcarrier spacing. The beam scanning supports up to 64 beam positions, and the beam scanning cannot support more than 64 beam positions. When operating in low-frequency bands, the beam positions supported by the beam scanning are even fewer, and multiple beam scanning scenarios are not supported. Thus, the satellite communication systems based on 5G, 5G-advanced and other communication systems need to enhance beam management and beam position indication methods for scenarios with multiple scanning beams and massive beam positions.

In order to solve the above problems, embodiments of the present disclosure provide an information transmission method and device, network device and user equipment. The method and the device are based on the same application concept; since the principles of solving problems by the method and the device are similar, the implementation of the device and the method can refer to each other, and repeated parts will not be repeated.

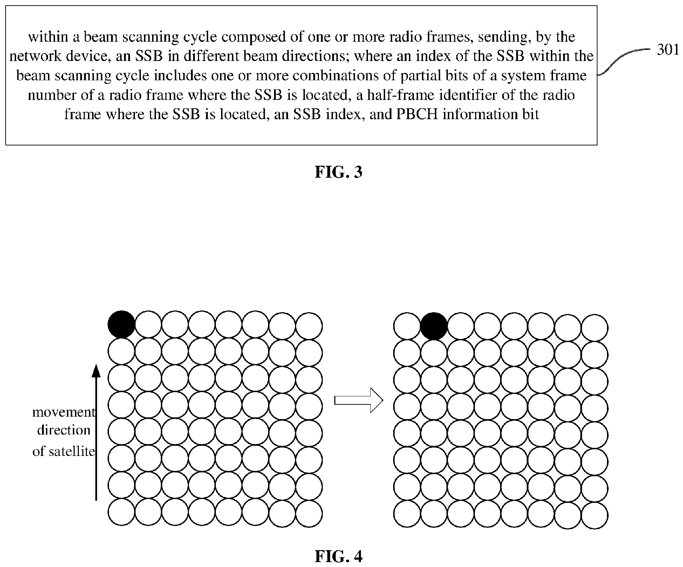

As shown in FIG. 3, which is a schematic flowchart of an information transmission method according to an embodiment of the present disclosure, the method is applied to a network device. The method may specifically include:

Step 301: within a beam scanning cycle comprising one or more radio frames, sending, by the network device, an SSB in different beam directions; where an index of the SSB within the beam scanning cycle includes one or more combinations of partial bits of a system frame number of a radio frame where the SSB is located, a half-frame identifier of the radio frame where the SSB is located, an SSB index, and PBCH information bit.

The present disclosure utilizes time extension (beam scanning is performed within one or more consecutive radio frames) to support satellite communication systems covering different numbers of beam positions. In addition, as the number of beam positions scanned within the beam scanning cycle increases, a single SSB index can no longer indicate the beam position index. The index of the SSB within the beam scanning cycle in the present disclosure can indicate the beam position index under the extended beam positions of the satellite communication system. The scheme in the present disclosure can meet access requirements of the satellite communication systems based on 5G, 5G-advanced and other communication systems.

In an optional embodiment, the above step 301 may specifically include:

in the beam scanning cycle, sending, by the network device, SSBs, by using one or multiple hopping beams at different beam positions; where the beam positions represent beam directions of the hopping beams, and an SSB pattern for each hopping beam remains identical within each SSB transmission cycle.

It is to be noted that the beam position indicates the beam direction of the hopping beam, that is, the beam position indicates a pointing direction of the hopping beam. In the satellite communication system, at least one hopping beam is specifically used for network authentication to achieve initial synchronization and network access authentication of a terminal (user). The hopping beam (also called control beam) is used for scanning in the entire satellite coverage zone. Since distribution and demand of satellite user services are uneven, in order to reduce synchronization complexity of the beam-hopping satellite communication system, in downlink, hopping beam is employed to cover the service area in a polling manner. As shown in FIG. 4, it is assumed that the satellite moves from south to north, the beam moves from west to east and from north to south, and the number of beam positions required to be covered is N, circles in the figure represent beam positions, and the circle filled with black represents a hopping beam. The hopping beam sends different signals, where dwell time of each signal varies at different beam positions.

In order to reduce the complexity of beam hopping synchronization, in the embodiment of the present disclosure, a fixed hopping pattern is adopted, that is, the dwell time of the beam hopping at each beam position is the same. In addition, in order to increase a probability of successful downlink synchronization of a satellite terminal within a single dwell time, the hopping beam needs to ensure that an initial downlink access of a maximum scanning beam position is completed within the frame structure, that is, SSB detection and system information block (SIB) detection are completed.

In order to meet beam position coverage requirements of different satellite communication systems and facilitate downlink synchronization, in the embodiment of the present disclosure, the beam scanning cycle comprises multiple frame structures, and the frame structure includes one or more consecutive radio frames. For example, a frame structure with a frame structure period of 10ms or 20ms can be selected, where the frame structure corresponding to the frame structure period of 10ms includes one radio frame, and the frame structure corresponding to the frame structure period of 20ms includes 2 consecutive radio frames.

It is to be understood that for satellite communication systems that support a small number N of coverage beam positions, fewer frame structures may be required to scan the N beam position using a single hopping beam. In one example, N=128; when the operating carrier frequency is 3.5GHz, a maximum of 8 SSBs are sent in a 5ms half-frame; if the frame structure period is 20ms, that is, one frame structure includes 2 consecutive radio frames, and the SSB transmission cycle is 10ms, then the hopping beam scans 8 beam positions in the first half frame or the second half frame of the 10ms radio frame. One frame structure includes 2 consecutive radio frames, and the hopping beam can scan 16 beam positions. Then, for scanning 128 beam positions, 8 consecutive frame structures are required. In this way, the needs of the beam hopping satellite communication system corresponding to this example can be met.

Generally, satellite communication systems support a large number (more than 64) of coverage beam positions, and some even support a huge number of coverage beam positions. Therefore, multiple hopping beams can be used to achieve scanning a large number of beam positions to meet coverage requirements.

Optionally, the SSB transmission cycle is an integer multiple of 5ms or an integer multiple of 10ms. In order to complete scanning of all beam positions as quickly as possible, the SSB transmission cycle is optionally the same as the frame structure period. For example, the SSB transmission cycle used by the 10ms frame structure is 10ms.

The network device can send SSB in multiple SSB transmission cycles through multiple frame structures. In each SSB transmission cycle, different SSBs are sent at different beam positions by beam hopping. In the beam scanning cycle, the beam positions scanned by hopping beam in different SSB transmission cycles are different. This utilizes temporal extension to support satellite communication systems with varying numbers of covered beam positions.

Optionally, the PBCH information bit includes one or more of the following information:

reserved bit in the MIB;

new bits in MIB;

reserved bit in the PBCH payload;

new bits in the PBCH payload;

reconfiguration of an existing bit field in the PBCH payload.

The PBCH content is shown in the following Table 2.

Table 2

| parameter name | parameter description | bit number | |
|---|---|---|---|
| | | FR1 | FR2 |
| systemFrameNumber (MIB) | 6 most significant bits (MSB) of 10-bit SFN | 6 | 6 |
| subCarrierSpacingCommon (MIB) | subcarrier spacing configured for initial access (e.g., broadcast message) | 1 | 1 |
| ssb-SubcarrierOffset (MIB) | the number of subcarriers representing frequency domain offset between SSB and system common resource block grid | 4 | 4 |
| dmrs-TypeA-Position (MIB) | symbol position (second or third symbol) of first PDSCH DM-RS in slot | 1 | 1 |
| pdcch-ConfigSIB 1 (MIB) | RMSI-PDCCH-Config | 8 | 8 |
| cellBarred (MIB) | indicate whether UE is allowed to camp on this cell | 1 | 1 |
| intraFreqReselection (MIB) | control of intra-frequency cell reselection | 1 | 1 |
| Spare (MIB) | spare | 1 | 1 |
| messageClassExtension | spare message extension | 1 | 1 |
| provided by physical layer | 4 least significant bits of 10-bit SFN | 4 | 4 |
| provided by physical layer | half-frame indication | 1 | 1 |
| provided by physical layer | spare Physical Layer (FR1) | 2 | 0 |
| provided by physical layer | most significant bit of the number of subcarriers representing frequency domain offset between SSB and system common resource block grid (FR1) | 1 | 0 |
| provided by physical layer | 3 most significant bits of SSB index (FR2) | 0 | 3 |
| provided by physical layer | bit cyclic Redundancy check code | 24 | 24 |
| total number | | 56 | 56 |

In the embodiment of the present disclosure, the SSB pattern of the beam hopping in each SSB transmission cycle is the same, that is, the SSB pattern for a single hopping beam scanning different beam positions in each SSB transmission cycle is the same; specifically, time domain symbol positions (SSB pattern) corresponding to multiple SSBs

9

(which can be called SSB burst set) sent by a single hopping beam in each corresponding SSB transmission cycle are the same. This can reduce information bits transmitted in the radio frame for indicating SSB index, thereby saving transmission resources.

Optionally, the SSB pattern for each hopping beam scanning different beam positions in the corresponding SSB transmission cycle is consistent with SSB pattern in the 5G NR slot.

Optionally, the frame structure identifier of the frame structure where the SSB is located is represented by at least one of partial bit of the system frame number of the radio frame where the SSB is located and PBCH information bits.

That is, the frame structure identifier of the frame structure where the SSB is located is represented by at least one of partial bits of the system frame number of the radio frame where the SSB is located, reserved bit in the MIB, reserved bit in the PBCH payload, newly added bits in the MIB, newly added bits in the PBCH payload, and reconfiguration of existing bit fields in the PBCH payload.

It is to be understood that when SSB transmission is implemented in multiple frame structures by using hopping beam scanning beam positions, the frame structure identifier of the frame structure where the SSB is located is used to indicate a position of the frame structure where the SSB is located. The frame structure identifier of the frame structure where the SSB is located can be represented by partial bits of the system frame number of the radio frame where the SSB is located. The frame structure identifier of the frame structure where the SSB is located can also be represented by one of the reserved bit in the MIB, the reserved bit in the PBCH payload, the newly added bits in the MIB, the newly added bits in the PBCH payload, and reconfiguration of the existing bit field in the PBCH payload.

Of course, any combination of the above can also be used to represent the frame structure identifier of the frame structure where the SSB is located. Among these combinations, partial bits of the system frame number of the radio frame where the SSB is located and the PBCH information bits can be used to represent the frame structure identifier of the frame structure where the SSB is located; the frame structure identifier of the frame structure where the SSB is located can also be represented by any combination of the PBCH information bits without partial bits of the system frame number of the radio frame where the SSB is located.

In an optional embodiment, the frame structure identifier of the frame structure where the SSB is located is represented by all bits of high k bits starting from the m-th least significant bit of the system frame number of the radio frame where the SSB is located, or the frame structure identifier of the frame structure where the SSB is located is represented by partial bits of the high k bits and the PBCH information bits; the identifier of the half frame of the radio frame where the SSB is located is represented by 1 bit, and the SSB index is represented by n bits; then,

$$m = \log_2 \left\lceil \frac{T_{frame}}{10} \right\rceil + 1, \quad k = \log_2 \left\lceil \frac{N}{L \times \frac{T_{frame}}{T_{SSB}}} \right\rceil, \quad n = \log_2 \left\lceil L \right\rceil,$$

where $T_{frame}$ represents frame structure period; $N$ represents a total number of beam positions to be scanned; $L$ represents a maximum number of beam positions scanned by hopping beam within an SSB transmission cycle; $T_{SSB}$ represents SSB transmission cycle for beam hopping.

In this embodiment, the system frame number of the radio frame where the SSB is located can not only identify the position of the radio frame where the SSB is located, but also some bits thereof can further identify the position of the frame structure where the SSB is located. If the frame structure includes two or more radio frames, some bits of the system frame number of the radio frame where the SSB is located can further identify the position of the radio frame where the SSB is located in its frame structure.

In one example, it is assumed that the satellite communication system supports 64 coverage beam positions, that is, a hopping beam needs to scan N=64 beam positions; when the frame structure period $T_{frame}$ is 10ms, the SSB transmission cycle $T_{SSB}$ is 5ms, at low frequency, the maximum number of beam positions that the hopping beam can scan in a 5ms half frame is L=4, and 8 beam positions can be scanned in 10ms. In this example, one hopping beam needs to scan 64 beam positions, then 8 frame structures (i.e., 8 radio frames) are required to scan the beam positions in time division. m= , k=3 are calculated by the above formula, that is, the high 3 bits starting from the first least significant bit of the system frame number are used to indicate a position of the frame structure where the SSB is located (i.e., the frame structure identifier of the frame structure where the SSB is located), that is, to identify which frame structure the SSB corresponds to. Since in this example, the frame structure includes one radio frame, the position of the frame structure where the SSB is located is the position of the radio frame where the SSB is located, that is, it is represented by the system frame number of the radio frame where the SSB is located.

In another example, it is assumed that the number of beam positions supported by the beam-hopping satellite communication system is 64, that is, one hopping beam needs to scan N=64 beam positions; when the frame structure period $T_{frame}$ is 20ms (that is, one frame structure includes two consecutive radio frames), the SSB transmission cycle $T_{SSB}$ is 20ms. At low frequency, the maximum number of beam positions scanned by the hopping beam within a 5ms half-frame is L=4, and 4 beam positions can be scanned within the SSB transmission cycle of 20ms. In this example, one hopping beam needs to scan 64 beam positions, and 16 frame structures (32 radio frames) are required to scan the beam positions in time division. The above formula is used to calculate m=2, k=4, that is, the high 4 bits starting from the second least significant bit of the system frame number of the radio frame where the SSB is located are used to represent the position of the frame structure where the SSB is located, that is, to identify which frame structure the SSB corresponds to. It is to be noted that 32 radio frames are required in this example, and the system frame number of the radio frame where the SSB is located is represented by the high 5 bits starting from the first least significant bit of the SFN; and the high 4 bits starting from the second least significant bit of the system frame number of the radio frame where the SSB is located are used to represent the position of the frame structure where the SSB is located.

In this example, for example, a system frame number of a radio frame where an SSB is located is 11, which is "01010" if it is represented by the high 5 bits starting from the first least significant bit of SFN. The system frame number of the radio frame where the SSB is located starts from 0, two system frame numbers correspond to one frame structure; and the frame structure identifier starts from 0. System frame numbers 0 and 1 correspond to frame structure 0, and system frame numbers 2 and 3 correspond to frame structure 1, and so on. The system frame number is 11, that is, "01010"; the high 4 bits starting from its second least significant bit are "0101", and "0101" means 5; that is, the system frame number 11 corresponds to frame structure 5, that is, SSB is in the frame structure with a frame structure identifier 5.

Optionally, one of the PBCH information bits, and some bits of the system frame number of the radio frame where the SSB is located, is used to indicate the position of the radio frame where the SSB is located in its frame structure; or,

the position of the radio frame where the SSB is located in its frame structure is agreed upon by a protocol.

It is to be noted that the position of the radio frame where the SSB is located in its frame structure can be indicated by some bits of the system frame number of the radio frame where the SSB is located. The above example of the frame structure period $T_{frame}$ being 20ms can be used to continue the explanation. For example, a system frame number of a radio frame where one SSB is located is 11, and a system frame number of a radio frame where another SSB is located in the same frame structure is 12; the system frame number 11 is represented by the high 5 bits starting from the first least significant bit of the SFN, that is, "01010"; and the system frame number 12 is represented by the high 5 bits starting from the first least significant bit of the SFN, that is, "01011". From the above explanation, it can be seen that for the system frame number 11, that is, "01010", the high 4 bits starting from its second least significant bit is "0101", "0101" means 5, and the first least significant bit LSB, that is, "0", is left. For the system frame number 12, that is, "01011", and the high 4 bits starting from its second least significant bit are "0101", "0101" means 5 (indicating that the two radio frames with system frame numbers 11 and 12 are in the same frame structure), and the first least significant bit LSB, that is, "1", is left. The first least significant bit LSB "0" of the system frame number 11 can be used to indicate the position (number 0) of the radio frame where the SSB of the system frame number 11 is located in its frame structure; the first least significant bit LSB "1" of the system frame number 12 can be used to indicate the position (number 1) of the radio frame where the SSB of the system frame number 12 is located in its frame structure.

Of course, the position of the radio frame where the SSB is located in its frame structure can also be indicated by the PBCH information bit or agreed upon by the protocol.

Optionally, the frame structure period is indicated by a protocol agreement or by a PBCH information bit. Here, the frame structure period is indicated by the PBCH information bit, so that the UE side can obtain the frame structure period by parsing information carried in the PBCH, and then the UE can determine a frame header position of the frame structure where the blind detected SSB is located. Of course, the frame structure period can also be agreed upon by the protocol, and both the network device and the UE side know the frame structure period, without wasting extra information transmission bits to indicate it.

Optionally, the reserved bit in the MIB or the reserved bit in the PBCH payload indicates that the index of the SSB in the beam scanning cycle is an SSB index under the extended beam position.

Optionally, the SSB maximum index value indicated by the PBCH information bit is the SSB maximum index value of the existing protocol or the SSB maximum index value supported under the extended beam position.

It is to be noted that, in order to be compatible with UEs supporting the 3GPP protocol (such as UEs of R17 version and/or later versions), the SSB index indication can support the number of beam positions defined in existing protocols, for example, in FR1, maximum number of beam positions supported by the SSB index indication is 8 beams. The SSB index enhancement indication can utilize 2-bit information of the physical layer of PBCH, where "00" indicates that the network supports a maximum of 8 SSB transmissions, which is compatible with existing R17 UEs and/or later versions of UEs; "01" indicates that a maximum of 128 SSB transmissions are supported, and UEs of non-terrestrial networks (NTN) systems with extended beam positions can be supported. The remaining two 2-bit information, "10" and "11" are reserved or used to support extension of beam positions, i.e., supporting 64 or 256 beam positions. This approach not only ensures compatibility with R17 UEs and/or future versions but also enhances flexibility in increasing the number of beams.

Optionally, when one hopping beam is used to send SSB at different beam positions within a frame structure, the hopping beam scans different beam positions in a time-division manner within a corresponding SSB transmission cycle.

Optionally, when multiple beam-hopping beams are used to send SSB at different beam positions within a frame structure, multiple beam-hopping partitions scan different beam positions in time-division manner within their respective corresponding SSB transmission cycles.

Specifically, multiple hopping beams are indicated by one of the following:

different frequency bands;
different bandwidth parts;
different cell identifiers;
reserved bit in the MIB;
new bits in MIB;
reserved bit in the PBCH payload;
new bits in the PBCH payload;
reconfiguration of an existing bit field in the PBCH payload.

It is to be noted that when there are multiple hopping beams, partitioned scanning is performed across multiple hopping beams. Multiple hopping beams can be indicated by different frequencies (different frequency bands or different bandwidth parts BWP), or different cell identifiers, or by multiplexing reserved bit or newly added bits in MIB or reserved bit or newly added bits in PBCH payload. The indication information of hopping beams can come from SIB messages, RRC messages, PBCH, etc. For example, different bandwidth parts BWP can come from SIB messages or RRC messages; reserved bit in MIB, newly added bits in MIB, reserved bit in PBCH payload, newly added bits in PBCH payload, and reconfiguration of existing bit fields in PBCH payload can come from information carried by PBCH.

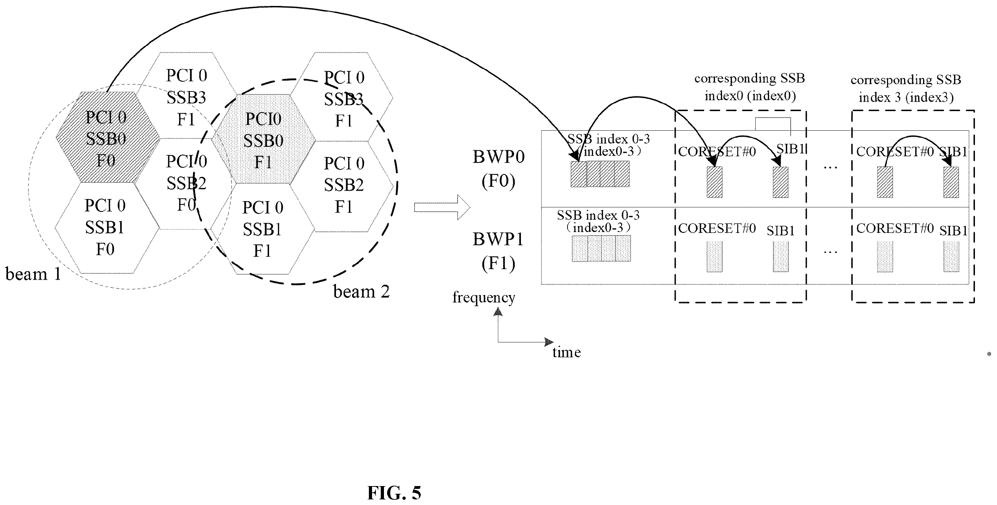

If multiple hopping beams belong to different cells, each hopping beam can be identified by a cell ID. If multiple hopping beams belong to the same cell, SSBs corresponding to the multiple hopping beams can be mapped to multiple BWPs. As shown in FIG. 5, multiple hopping beams are indicated by multiplexing the reserved bit or newly added bits in the MIB, or the reserved bit or newly added bits in the PBCH payload, after the hopping beams send the SSB blocks at different beam positions in time-division manner, the hopping beams send CORESET#0 and SIB1 at different beam positions in time-division manner in the next time.

Optionally, the bit information used for the SSB numbering within the beam scanning cycle is not scrambled during the first scrambling process.

Optionally, the system frame number at which hopping beam starts scanning in each beam scanning cycle meets the same condition.

For example, SFNmod frame structure period=0, or SFNmod frame structure period=1, etc.; this facilitates implementation of some rules agreed upon by the protocol.

Optionally, the number of beam positions is indicated by a system information block SIB message, for example, SIB1 or a radio resource control (RRC) message.

A maximum number of SSBs transmitted in an SSB burst set supported in the 5G NR protocol is L=64, and the corresponding SSB index requires 6 bit-information, of which the lower 3 bits are carried by the PBCH DMRS, and the remaining 3 bits in the SSB index are carried by the PBCH payload.

The PBCH transmit time interval (TTI) update period is 80ms, which is greater than or equal to the beam hopping scanning period, that is, $T_p \geq N*T_B$. If the minimum transmission period of the SSB burst set is 5ms, then there are 16 possible positions of the SSB burst set in the update period. The possible positions of different beam positions can be indicated by the least significant bit (LSB) of the multi-bit system frame number (SFN) and the half-frame index extension SSB index. Except for the SSB index and SFN number, the content of the PBCH remains unchanged in a PBCH update period. There will be multiple PSS/SSS in one beam scanning cycle, and different UEs may detect PSS/SSS at different symbol positions. Therefore, even if the UE detects PSS/SSS, the frame boundary is still unknown. Therefore, the base station needs to notify the UE of the sequence number of the SSB in the SSB burst set (i.e., the SSB index). When the UE knows the SSB index and combines it with the SSB pattern, the UE can determine the slot index in the radio frame of the SSB and the orthogonal frequency division multiplexing (OFDM) symbol index in the slot. Depending on the frequency band where the SSB is located, the SSB index is divided into 2, 3 or 6 bits, which are used for the frequency band below 3 GHz, the frequency band of 3 to 6 GHz, and the frequency range of 6 to 52.6 GHz, respectively. The SSB index is carried by the PBCH payload and PBCH DMRS, and two or three LSBs are carried by changing the demodulation reference signal (DMRS) sequence of the PBCH. Therefore, for the frequency range below 6 GHz, the UE can obtain the SSB index without decoding the PBCH. This design is also conducive to the soft merging of the PBCH, because the content of the PBCH payload in the SSB corresponding to these different SSB indices is the same.

Embodiment 1: Beam hopping scanning pattern (SCS=15KHz, frame structure period 10ms, SSB transmission cycle 5ms)

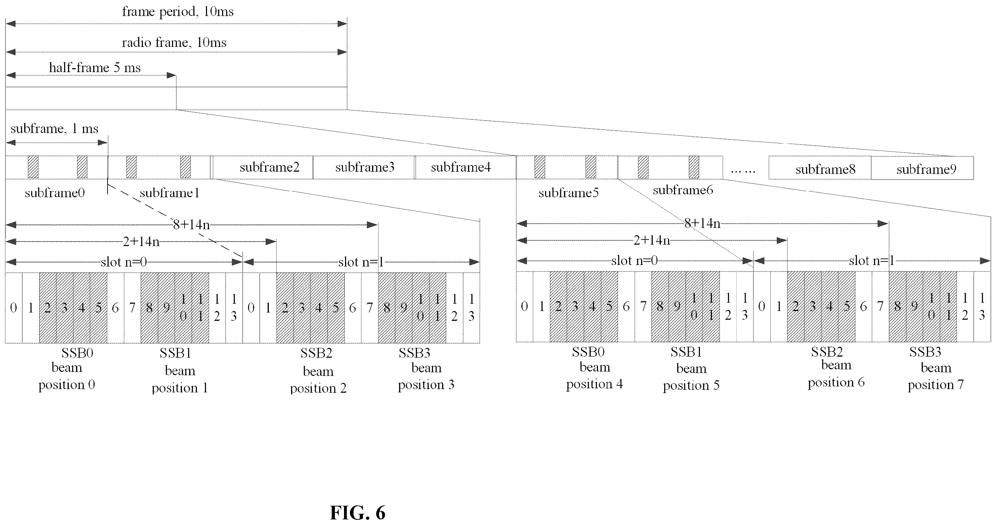

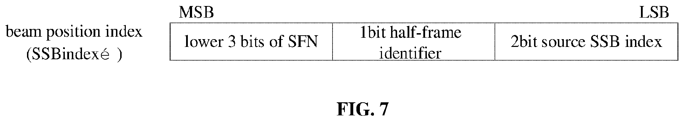

The beam hopping of the satellite communication system scans the beam positions according to the SSB pattern in Table 1 to send SSB. Taking SSB mapping mode A as an example, at a carrier frequency of 2.6 GHz, a maximum of 4 SSBs are sent in a 5 ms half frame. In this embodiment, the SSB transmission cycle is 5 ms and the frame structure period is 10 ms. In a half radio frame of 5 ms, beam hopping can scan 4 beam positions and 8 beam positions in 10 ms, and a specific beam hopping scanning pattern is shown in FIG. 6. If the hopping beam needs to scan 64 beam positions, 8 radio frames are required to scan the beam positions in time-division manner. The lower 3 bits of SFN, 1-bit of half frame identifier and 2 bits of SSB index are used to indicate the beam position index (that is, the number of SSB in the beam scanning cycle), as shown in FIG. 7.

When there are multiple hopping beams, multiple hopping beams perform partitioned scanning. The multiple hopping beams are indicated by reusing the reserved bit or newly added bits in the MIB or the reserved bit or newly added bits in the PBCH payload. In this embodiment, since one frame structure includes only one radio frame, the index of the SSB in the beam scanning cycle does not include the position of the radio frame where the SSB is located in its frame structure.

Embodiment 2: control beam scanning pattern (SCS=15KHz, frame structure period 10ms, SSB transmission cycle 10ms)

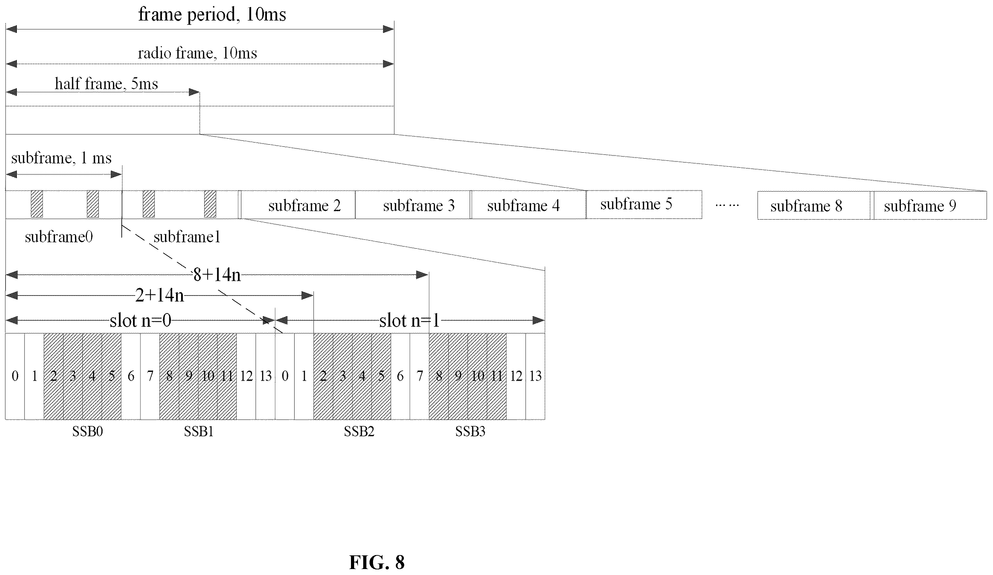

The beam hopping of the satellite communication system scans the beam positions according to the SSB pattern in Table 1 to send SSB. Taking SSB mapping mode A as an example, at a carrier frequency of 2.6 GHz, a maximum of 4 SSBs are sent in a 5 ms half frame. In this embodiment, the SSB transmission cycle is 10 ms and the frame structure period is 10 ms. The beam hopping scans 4 beam positions in the first half frame or the second half frame (the first half frame is used in this embodiment) of a radio frame of 10 ms, and a specific beam hopping scanning pattern is shown in FIG. 8. If the hopping beam needs to scan 64 beam positions, 16 radio frames are required to scan the beam positions in time-division manner, and the lower 4 bits of the SFN and the 2-bit of SSB index are used to indicate the beam position index (that is, the index of the SSB in the beam scanning cycle).

When there are multiple hopping beams, the multiple hopping beams perform partitioned scanning, and the multiple hopping beams are indicated by reusing reserved bit or newly added bits in the MIB, or reserved bit or newly added bits in the PBCH payload.

Embodiment 3: controlling beam scanning pattern (SCS=30KHz, frame structure period and SSB transmission cycle are both 20ms)

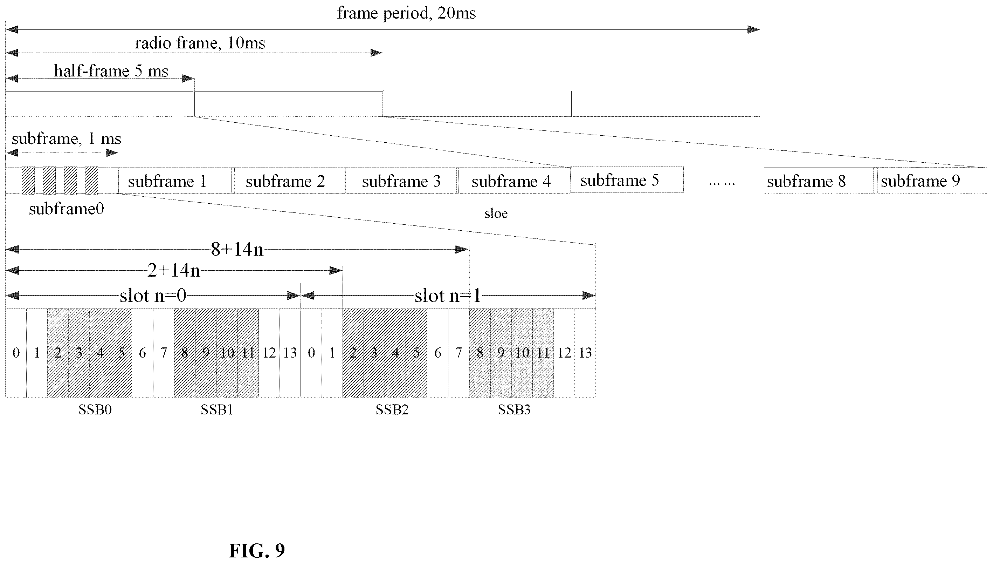

The beam hopping of the satellite communication system scans the beam positions according to the SSB pattern in Table 1 to send SSB. Taking SSB mapping mode C as an example, at a carrier frequency of 1.8 GHz, a maximum of 4 SSBs are sent in a 5 ms half frame. In this embodiment, the SSB transmission cycle is 20 ms and the frame structure period is 20 ms (i.e., one frame structure includes 2 radio frames). The hopping beam scans 4 beam positions in the first half frame or the second half frame of an odd or even radio frame of 10 ms in a frame structure, and a specific beam hopping scanning pattern is shown in FIG. 9. If the hopping beam needs to scan 64 beam positions, 16 frame structure periods (i.e., 32 radio frames) are required to scan the beam positions in a time-division manner.

In FR1, 1 bit can be reserved in MIB, or 2 bits can be reserved in PBCH payload. The reserved bit can be used to identify the position of the radio frame where the SSB is located in the frame structure, or the least significant bit LSB of SFN can be used to identify the position of the radio frame where the SSB is located in the frame structure.

In this embodiment, the frame structure identifier of the frame structure where the SSB is located (i.e., which frame structure among the 16 frame structures the SSB is in) can be represented by the high 4 bits starting from the second least significant bit of the system frame number of the radio frame where the SSB is located, and the first least significant bit of the system frame number of the radio frame where the SSB is located can be used to indicate the position of the radio frame where the SSB is located in its frame structure.

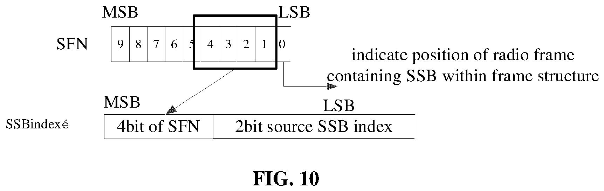

In this embodiment, the beam position index (that is, the index of the SSB in the beam scanning cycle) can be indicated by the high 4 bits starting from the second least significant bit of the system frame number of the radio frame where the SSB is located and 2 bits of the SSB index, as shown in FIG. 10.

After that, the UE side parses the PBCH in the SSB detected by blind detection, obtains the system frame number SFN and half-frame identifier, and determines the starting position of the frame structure where the SSB is located.

When there are multiple hopping beams, the multiple hopping beams perform partitioned scanning, the multiple hopping beams are indicated by reusing reserved bit or newly added bits in the MIB, or reserved bit or newly added bits in the PBCH payload.

Embodiment 4: controlling beam scanning pattern (SCS=30KHz, frame structure period and SSB transmission cycle are both 10ms)

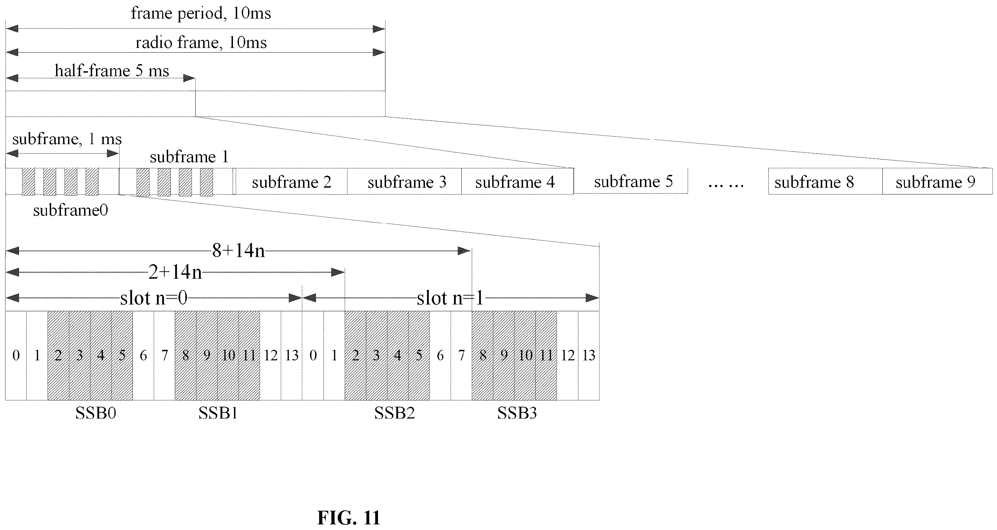

The beam hopping of the satellite communication system scans the beam positions according to the SSB pattern in Table 1 to send SSB. Taking SSB mapping mode C as an example, at a carrier frequency of 3.5 GHz, a maximum of 8 SSBs are sent in a 5 ms half frame, and the SSB index is represented by 3-bit information carried by the PBCH DMRS. In this embodiment, the SSB transmission cycle is 10 ms, and the frame structure period is 10 ms. The hopping beam scans 8 beam positions in the first half frame or the second half frame of the 10 ms radio frame, and a specific beam hopping scanning pattern is shown in FIG. 11. If the beam hopping needs to scan 128 beam positions, 16 radio frames are required to scan the beam positions in time-division manner.

A reserved 1-bit in the MIB can be used to indicate that this mode is an extended beam position system, that is, the index of the SSB in the beam scanning cycle is SSB index under the extended beam positions.

When using FR1, a reserved 1-bit or 2-bit in the PBCH payload can be used to indicate that this mode is an extended beam position system, that is, the index of the SSB in the beam scanning cycle is the SSB index under the extended beam positions.

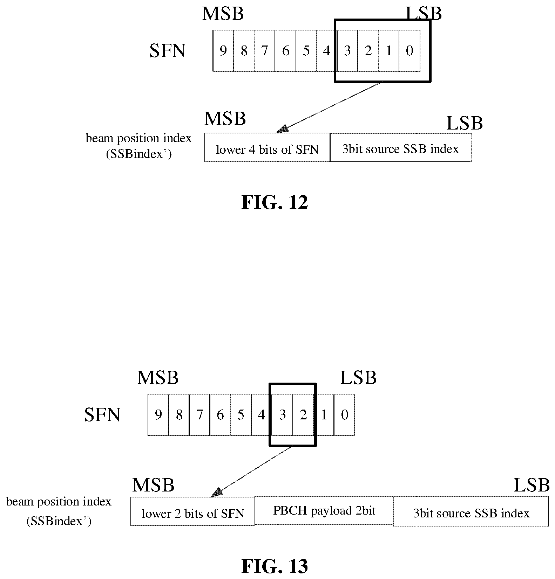

A first representation method can be used, as shown in FIG. 12, the lower 4 bits of the SFN and 3 bits SSB index are directly used to indicate the beam position index (that is, the index of the SSB in the beam scanning cycle).

A second representation method can also be used, as shown in FIG. 13, in FR1, the reserved 2 bits of the PBCH payload, the 3rd and 4th least significant bits of the SFN (2-bit information) and the 3-bit SSB index to indicate the beam position index (that is, the index of the SSB in the beam scanning cycle);

alternatively, the 2 bits in the PBCH payload, the 3rd and 4th least significant bits of the SFN (2-bit information) and the 3-bit SSB index are reused to indicate the beam position index (that is, the index of the SSB in the beam scanning cycle). For example, the half-frame indication and the most significant bit (FR1) of the number of subcarriers representing the frequency-domain offset between SSB and system common resource block grid can be reused.

Embodiment 5: control beam scanning pattern (SCS=30KHz, frame structure period 20ms, SSB transmission cycle 10ms)

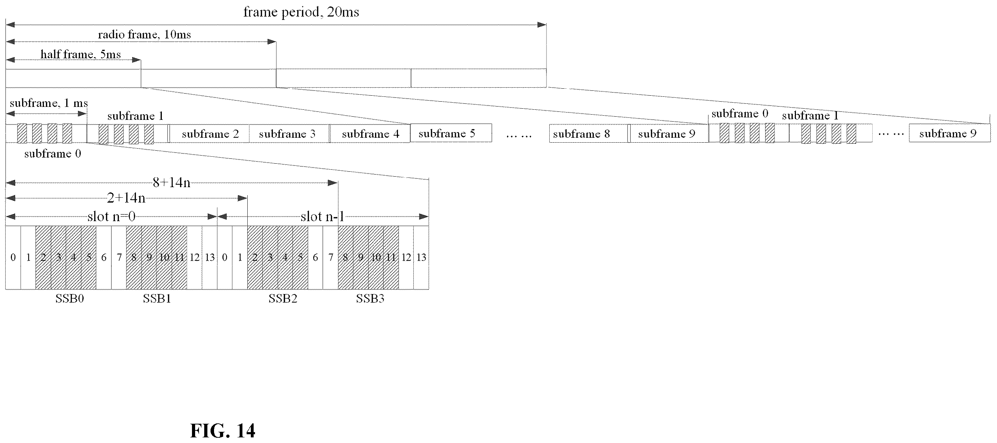

The beam hopping of the satellite communication system scans the beam positions according to the SSB pattern in Table 1 to send SSB. Taking SSB mapping mode C as an example, at a carrier frequency of 3.5 GHz, a maximum of 8 SSBs are sent in a 5 ms half frame, and the SSB index is represented by 3-bit information carried by the PBCH DMRS. In this embodiment, the SSB transmission cycle is 10 ms, and the frame structure period is 20 ms. The hopping beam scans 8 beam positions in the first half frame or the second half frame of the 10 ms radio frame, and 16 beam positions can be scanned in 20 ms, and a specific beam hopping scanning pattern is shown in FIG. 14. If the beam hopping needs to scan 128 beam positions, 8 frame structure periods (16 radio frames) are required to scan the beam positions in a time-division manner. 3 bits are required to represent the position of the frame structure, and 1 bit is required to represent the position of the radio frame where the SSB is located in the frame structure.

A reserved 1-bit in the MIB can be used to indicate that this mode is an extended beam position system, that is, the index of the SSB in the beam scanning cycle is SSB index under the extended beam positions.

In this embodiment, the frame structure identifier of the frame structure where the SSB is located (that is, which frame structure among the 8 frame structures the SSB is in) can be represented by the high 3 bits starting from the second least significant bit LSB of the system frame number SFN of the radio frame where the SSB is located.

The first least significant bit (1 bit) of the system frame number SFN of the radio frame where the SSB is located can be used to indicate the position of the radio frame where the SSB is located in the frame structure; or the 1 bit reserved in the PBCH load in FR1 can be used to indicate the position of the radio frame where the SSB is located in the frame structure.

In FR1, 1 or 2 bits reserved in the PBCH payload van be used to indicate the frame structure period, with 10 ms radio frames as units, 0 or 00 indicates 10 ms, 1 or 01 indicates 20 ms, and so on.

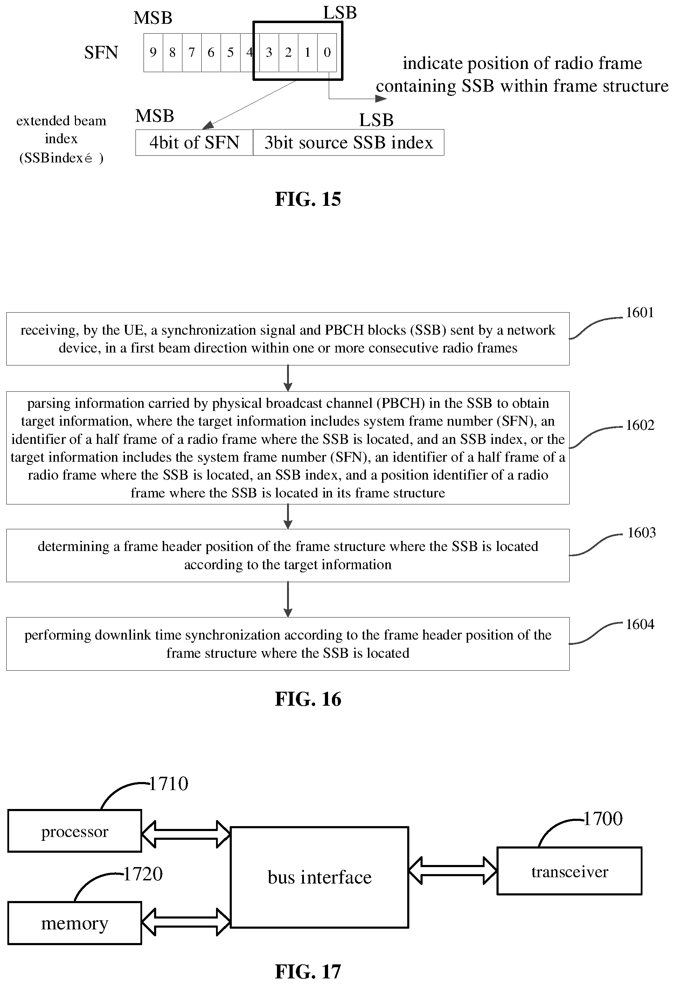

In this embodiment, the beam position index (that is, the index of the SSB in the beam scanning cycle) can be indicated by the system frame number (4 bits) of the radio frame where the SSB is located and the 3-bit SSB index, as shown in FIG. 15.

The information transmission method of the embodiment of the present disclosure, based on the satellite communication system of 5G, SG-advanced and other communication systems, can support multiple hopping beams to perform simultaneous scanning, support satellite communication scenarios with a large number of beam positions, and support SSB transmission patterns of multiple hopping beams, which is conducive to meeting the beam position coverage requirements of different satellite communication systems; in the beam-hopping satellite communication system, it is conducive to the UE to quickly realize downlink time synchronization and expand the beam-hopping coverage range, without being limited by the maximum 64 beam positions of 5G NR.

As shown in FIG. 16, it is a schematic flowchart of an information transmission method according to an embodiment of the present disclosure. The method is applied to a UE and may specifically include:

Step 1601: receiving, by the UE, a synchronization signal and PBCH blocks (SSB) sent by a network device, in a first beam direction within one or more consecutive radio frames.

Here, the UE blindly detects SSB in the first beam direction (generally referring to one beam direction).

It is to be noted that when the UE accesses the NR system, the UE first detects PSS and SSS to obtain downlink time and frequency synchronization and physical cell identity (PCID), and then decodes the PBCH. The PBCH includes MIB and other information related to the SSB transmission time (additional timing related PBCH payload bits).

Step 1602: parsing information carried by physical broadcast channel (PBCH) in the SSB to obtain target information, where the target information includes system frame number (SFN), an identifier of a half frame of a radio frame where the SSB is located, and an SSB index, or the target information includes the system frame number (SFN), an identifier of a half frame of a radio frame where the SSB is located, an SSB index, and a position identifier of a radio frame where the SSB is located in its frame structure;

Step 1603: determining a frame header position of the frame structure where the SSB is located according to the target information;

Step 1604: performing downlink time synchronization according to the frame header position of the frame structure where the SSB is located.

Since dwell time of the hopping beam in each beam position is time-division, after detecting an SSB in one beam position, the UE needs to determine which dwell time interval within the corresponding radio frame the SSB belongs to, i.e., determining a specific frame header position of the radio frame where the SSB is located, so as to perform downlink time synchronization, that is, the UE determines which radio frame, which half radio frame, which radio frame in the frame structure, which SSB index, and which dwelling beam position, to synchronize to.

Since the beam scanning cycle is relatively long, if the UE fails to successfully access the cell within the dwell time, assuming that the UE is stationary, the UE will have to wait for the next beam hopping scanning to the beam position before accessing. In other words, if the UE of the beam hopping satellite system cannot complete an initial cell search within a beam scanning cycle, the UE needs to wait for the next beam scanning cycle to re-perform the initial cell search, which is equivalent to the UE using the SSB burst set default cycle equal to the scanning cycle, and the configuration cycle can only be a multiple of the scanning cycle.

It is to be noted that after the UE initially accesses the satellite system, the UE reads the broadcast information to obtain the MIB, and then obtains other system information (SIB). The beam scanning cycle information, or the number of beam positions and beam position dwell time information, is read from SIB1. The ephemeris information and timestamp information need to be carried in the system message. Based on the ephemeris information, the UE needs to autonomously extrapolate the ephemeris information according to a channel model within the beam scanning cycle to maintain downlink synchronization.

Optionally, the frame structure includes one or more consecutive radio frames.

Optionally, a frame structure identifier of the frame structure where the SSB is located is represented by SFN and/or PBCH information bits.

That is to say, the UE can obtain the frame structure identifier of the frame structure where the SSB is located by parsing the SFN and/or PBCH information bits.

Optionally, the frame structure identifier of the frame structure where the SSB is located is represented by all bits of high k bits starting from the m-th least significant bit of the system frame number, or the frame structure identifier of the frame structure where the SSB is located is represented by partial bits of the high k bits and the PBCH information bits; then,

$$m = \log_2 \left\lceil \frac{T_{frame}}{10} \right\rceil + 1, \quad k = \log_2 \left\lceil \frac{N}{L \times \dfrac{T_{frame}}{T_{SSB}}} \right\rceil, \quad n = \log_2 \left\lceil L \right\rceil,$$

where $T_{frame}$ represents frame structure period; $N$ represents a total number of beam positions to be scanned; $L$ represents a maximum number of beam positions scanned by hopping beam within an SSB transmission cycle; $T_{SSB}$ represents SSB transmission cycle for beam hopping.

That is, the UE can obtain the frame structure identifier of the frame structure where the SSB is located by parsing the high k bits starting from the m-th least significant bit of the SFN.

Optionally, the position identifier of the radio frame where the SSB is located in its frame structure is represented by one of the PBCH information bits and partial bits of the SFN;

or, the position identifier of the radio frame where the SSB is located in its frame structure is identified by protocol agreement.

That is to say, the UE can determine the position identifier of the radio frame where the SSB is located in its frame structure through protocol agreement, or obtain the position identifier of the radio frame where the SSB is located in its frame structure by parsing the PBCH information bits or partial bits of the SFN.

Optionally, the frame structure period is agreed upon by a protocol or indicated by PBCH information bit.

Optionally, the SSB maximum index value indicated by the PBCH information bit is the SSB maximum index value of the existing protocol or the SSB maximum index value supported under the extended beam position.

Optionally, the reserved bit in the MIB or the reserved bit in the PBCH payload indicates that the SSB number in the beam scanning cycle is the SSB index under the extended beam position, and the beam scanning cycle is K times the frame structure period.

Optionally, the PBCH information bit includes one or more of the following information:

reserved bit in the master information block MIB;
new bits in the MIB;
reserved bit in the PBCH payload;
new bits in the PBCH payload;
reconfiguration of an existing bit field in the PBCH payload.

In an optional embodiment, the method of the embodiment of the present disclosure may further include:

obtaining beam hopping indication information, where the beam hopping indication information includes one or more of the following:
different frequency bands;
different bandwidth parts;
different cell identifiers;
reserved bit in the MIB;
new bits in MIB;
reserved bit in the PBCH payload;
new bits in the PBCH payload;
reconfiguration of an existing bit field in the PBCH payload.

It is to be noted that the UE can obtain beam hopping indication information through SIB messages, SSB messages, RRC messages and other messages.

Specifically, the UE may obtain different bandwidth parts through a SIB message or an RRC message to obtain different indicated hopping beams.

The UE can obtain one or more of different cell identifiers, reserved bit in the MIB, newly added bits in the MIB, reserved bit in the PBCH payload, newly added bits in the PBCH payload, and reconfiguration of existing bit fields in the PBCH payload through the SSB, thereby obtaining the indicated different hopping beams.

The UE side learns which hopping beams the network devices use for beam scanning, which helps provide a basis for subsequent beam switching that may be involved.

According to the information transmission method of the embodiment of the present disclosure, the UE receives SSB sent by a network device in a first beam direction within one or more consecutive radio frames; parses the information carried by PBCH in the SSB to obtain target information, where the target information includes SFN, an identifier of a half frame of the radio frame where the SSB is located, and an SSB index, or the target information includes SFN, an identifier of a half frame of the radio frame where the SSB is located, an SSB index, and an identifier of a position of the radio frame where the SSB is located in its frame structure; determines the frame header position of the frame structure where the SSB is located according to the target information; performs downlink time synchronization according to the frame header position of the frame structure where the SSB is located, thereby meeting the access requirements of satellite communication systems based on 5G, 5G-advanced and other communication systems.

As shown in FIG. 17, one embodiment of the present disclosure further provides a network device, including: a memory 1720, a transceiver 1700, and a processor 1710. The memory 1720 is used to store a computer program. The transceiver 1700 is used to send and receive data under the control of the processor 1710. The processor 1710 is used to read the computer program in the memory 1720 and perform the following operations:

through the transceiver 1700, within a beam scanning cycle comprising one or more radio frames, sending, by the network device, an SSB in different beam directions; where an index of the SSB within the beam scanning cycle includes one or more combinations of partial bits of a system frame number of a radio frame where the SSB is located, a half-frame identifier of the radio frame where the SSB is located, an SSB index, and PBCH information bit.

In FIG. 17, a bus architecture may include any number of interconnected bus and bridge. Specifically, various circuits of one or more processors, which are represented by the processor 1710, and one or more memories, which are represented by the memory 1720, are linked together. The bus architecture may link various other circuits, such as a peripheral device, voltage regulator and a power management circuit together. These features are well known in this field;

therefore, this disclosure does not make further description on these features. The bus interface provides an interface. The transceiver 1700 may be multiple elements, including a transmitter and a receiver and provide units, which communicate with other devices on the transmission medium, and the transmission medium includes wireless channels, wired channels, optical cables and other transmission medium. The processor 1710 is responsible for managing the bus architecture and the normal processing. The memory 1720 may be used to store data used by the processor 1719 for performing operations.

The processor 1710 may be a central processing unit (CPU), an application specific integrated circuit (ASIC), a field-programmable gate array (FPGA) or a complex programmable logic device (CPLD). The processor may also adopt multi-core architecture.

Optionally, the transceiver 1700 is further configured to:

in the beam scanning cycle, use by the network device, one or more hopping beams to send synchronization signal blocks SSB at different beam positions, where the beam positions represent the beam directions of the hopping beams, and the SSB pattern of the hopping beams in each SSB sending period is the same.

Optionally, the PBCH information bit includes one or more of the following information:

reserved bit in the MIB;
new bits in MIB;
reserved bit in the PBCH payload;
new bits in the PBCH payload;
reconfiguration of an existing bit field in the PBCH payload.

Optionally, the beam scanning cycle comprises multiple frame structures, and the frame structure includes one or more consecutive radio frames.

Optionally, the frame structure identifier of the frame structure where the SSB is located is represented by at least one of partial bit of the system frame number of the radio frame where the SSB is located and PBCH information bits.

Optionally, the frame structure identifier of the frame structure where the SSB is located is represented by all bits of high k bits starting from the m-th least significant bit of the system frame number of the radio frame where the SSB is located, or the frame structure identifier of the frame structure where the SSB is located is represented by partial bits of the high k bits and the PBCH information bits; the identifier of the half frame of the radio frame where the SSB is located is represented by 1 bit, and the SSB index is represented by n bits; then,

$$m = \log_2 \left\lceil \frac{T_{frame}}{10} \right\rceil + 1, \quad k = \log_2 \left\lceil \frac{N}{L \times \frac{T_{frame}}{T_{SSB}}} \right\rceil, \quad n = \log_2 \left\lceil L \right\rceil,$$

where $T_{frame}$ represents frame structure period; $N$ represents a total number of beam positions to be scanned; $L$ represents a maximum number of beam positions scanned by hopping beam within an SSB transmission cycle; $T_{SSB}$ represents SSB transmission cycle for beam hopping.

Optionally, one of the PBCH information bits, and some bits of the system frame number of the radio frame where the SSB is located, is used to indicate the position of the radio frame where the SSB is located in its frame structure; or,

the position of the radio frame where the SSB is located in its frame structure is agreed upon by a protocol.

Optionally, the frame structure period is indicated by a protocol agreement or by a PBCH information bit.

Optionally, the reserved bit in the MIB or the reserved bit in the PBCH payload indicates that the index of the SSB in the beam scanning cycle is an SSB index under the extended beam position.

Optionally, the SSB maximum index value indicated by the PBCH information bit is the SSB maximum index value of the existing protocol or the SSB maximum index value supported under the extended beam position.

Optionally, when one hopping beam is used to send SSB at different beam positions within a frame structure, the hopping beam scans different beam positions in a time-division manner within a corresponding SSB transmission cycle.

Optionally, when multiple beam-hopping beams are used to send SSB at different beam positions within a frame structure, multiple beam-hopping partitions scan different beam positions in time-division manner within their respective corresponding SSB transmission cycles.

Optionally, multiple hopping beams are indicated by one of the following:

different frequency bands;
different bandwidth parts;
different cell identifiers;
reserved bit in the MIB;
new bits in MIB;
reserved bit in the PBCH payload;
new bits in the PBCH payload;
reconfiguration of an existing bit field in the PBCH payload.

Optionally, the bit information used for the SSB numbering within the beam scanning cycle is not scrambled during the first scrambling process.

Optionally, the system frame number at which hopping beam starts scanning in each beam scanning cycle meets the same condition.

Optionally, the number of beam positions is indicated by a system information block SIB message.

The network device of the embodiment in the present disclosure can support satellite communication systems covering different numbers of beam positions by using time extension. In addition, as the number of beam positions scanned within the beam scanning cycle increases, a single SSB index can no longer indicate the beam position index. The numbering of the SSB within the beam scanning cycle in the present disclosure can indicate the beam position index under the extended beam positions of the satellite communication system. The scheme in the present disclosure can meet access requirements of the satellite communication systems based on 5G, 5G-advanced and other communication systems.

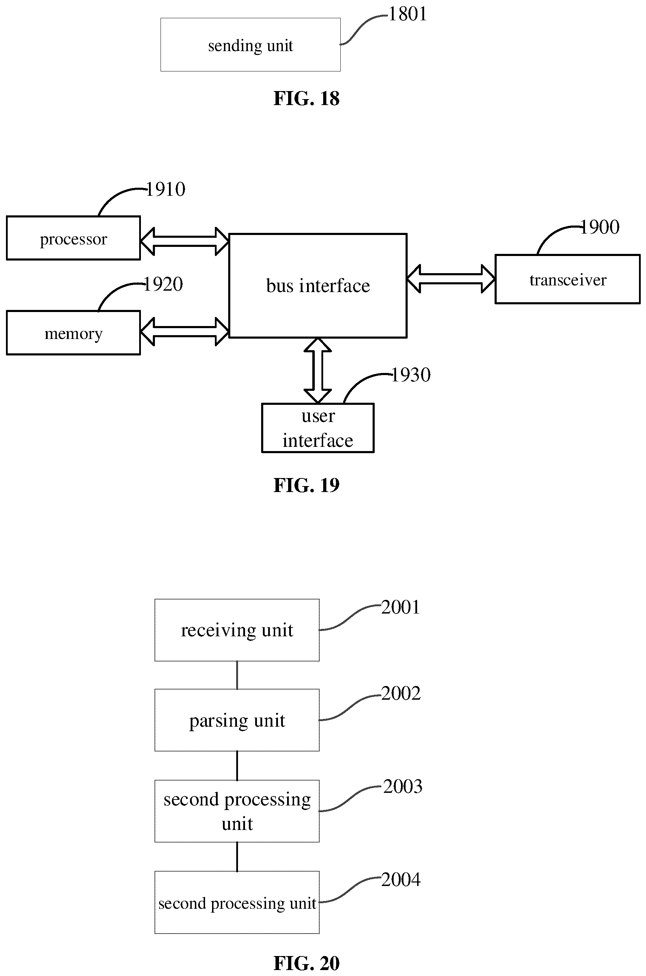

As shown in FIG. 18, one embodiment of the present disclosure further provides an information transmission device, including:

a sending unit 1801 used to, within a beam scanning cycle comprising one or more radio frames, send, by the network device, an SSB in different beam directions; where an index of the SSB within the beam scanning cycle includes one or more combinations of partial bits of a system frame number of a radio frame where the SSB is located, a half-frame identifier of the radio frame where the SSB is located, an SSB index, and PBCH information bit.

Optionally, the sending unit 1801 is specifically used to:

in the beam scanning cycle, use by the network device, one or more hopping beams to send synchronization signal blocks SSB at different beam positions, where the beam positions represent the beam directions of the hopping beams, and the SSB pattern of the hopping beams in each SSB sending period is the same.

Optionally, the PBCH information bit includes one or more of the following information:

reserved bit in the MIB;
new bits in MIB;
reserved bit in the PBCH payload;
new bits in the PBCH payload;
reconfiguration of an existing bit field in the PBCH payload.

Optionally, the beam scanning cycle comprises multiple frame structures, and the frame structure includes one or more consecutive radio frames.

Optionally, the frame structure identifier of the frame structure where the SSB is located is represented by at least one of partial bit of the system frame number of the radio frame where the SSB is located and PBCH information bits.

Optionally, the frame structure identifier of the frame structure where the SSB is located is represented by all bits of high k bits starting from the m-th least significant bit of the system frame number of the radio frame where the SSB is located, or the frame structure identifier of the frame structure where the SSB is located is represented by partial bits of the high k bits and the PBCH information bits; the identifier of the half frame of the radio frame where the SSB is located is represented by 1 bit, and the SSB index is represented by n bits; then,

$$m = \log_2\left\lceil \frac{T_{frame}}{10} \right\rceil + 1, \quad k = \log_2\left\lceil \frac{N}{L \times \frac{T_{frame}}{T_{SSB}}} \right\rceil, \quad n = \log_2\lceil L \rceil,$$

where $T_{frame}$ represents frame structure period; $N$ represents a total number of beam positions to be scanned; $L$ represents a maximum number of beam positions scanned by hopping beam within an SSB transmission cycle; $T_{SSB}$ represents SSB transmission cycle for beam hopping.

Optionally, one of the PBCH information bits, and some bits of the system frame number of the radio frame where the SSB is located, is used to indicate the position of the radio frame where the SSB is located in its frame structure; or,

the position of the radio frame where the SSB is located in its frame structure is agreed upon by a protocol.

Optionally, the frame structure period is indicated by a protocol agreement or by a PBCH information bit.

Optionally, the reserved bit in the MIB or the reserved bit in the PBCH payload indicates that the index of the SSB in the beam scanning cycle is an SSB index under the extended beam position.

Optionally, the SSB maximum index value indicated by the PBCH information bit is the SSB maximum index value of the existing protocol or the SSB maximum index value supported under the extended beam position.

Optionally, when one hopping beam is used to send SSB at different beam positions within a frame structure, the hopping beam scans different beam positions in a time-division manner within a corresponding SSB transmission cycle.

Optionally, when multiple beam-hopping beams are used to send SSB at different beam positions within a frame structure, multiple beam-hopping partitions scan different beam positions in time-division manner within their respective corresponding SSB transmission cycles.

Optionally, multiple hopping beams are indicated by one of the following:

different frequency bands;
different bandwidth parts;
different cell identifiers;
reserved bit in the MIB;
new bits in MIB;
reserved bit in the PBCH payload;
new bits in the PBCH payload;
reconfiguration of an existing bit field in the PBCH payload.

Optionally, the bit information used for the SSB numbering within the beam scanning cycle is not scrambled during the first scrambling process.

Optionally, the system frame number at which hopping beam starts scanning in each beam scanning cycle meets the same condition.

Optionally, the number of beam positions is indicated by a system information block SIB message.

The information transmission device of the embodiment in the present disclosure can support satellite communication systems covering different numbers of beam positions by using time extension. In addition, as the number of beam positions scanned within the beam scanning cycle increases, a single SSB index can no longer indicate the beam position index. The numbering of the SSB within the beam scanning cycle in the present disclosure can indicate the beam position index under the extended beam positions of the satellite communication system. The scheme in the present disclosure can meet access requirements of the satellite communication systems based on 5G, 5G-advanced and other communication systems.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

One embodiment of the present disclosure further provides a processor-readable storage medium, which includes program instructions stored thereon. The computer program is used to cause a processor to perform:

within a beam scanning cycle comprising one or more radio frames, sending, by the network device, an SSB in different beam directions; where an index of the SSB within the beam scanning cycle includes one or more combinations of partial bits of a system frame number of a radio frame where the SSB is located, a half-frame identifier of the radio frame where the SSB is located, an SSB index, and PBCH information bit.

When the program instructions are executed by the processor, all implementation methods of the method embodiment applied to the network device as shown in FIG. 3 can be implemented, which will not be described here to avoid repetition.

As shown in FIG. 19, one embodiment of the present disclosure further provides a user equipment (UE), including: a memory 1920, a transceiver 1900, and a processor 1910. The memory 1920 is used to store a computer program. The transceiver 1900 is used to send and receive data under the control of the processor 1910. The processor 1910 is used to read the computer program in the memory 1920 and perform the following operations:

receiving, by the transceiver 1900, a synchronization signal and PBCH blocks (SSB) sent by a network device, in a first beam direction within one or more consecutive radio frames;

parsing information carried by physical broadcast channel (PBCH) in the SSB to obtain target information, where the target information includes system frame number (SFN), an identifier of a half frame of a radio frame where the SSB is located, and an SSB index, or the target information includes the system frame number (SFN), an identifier of a half frame of a radio frame where the SSB is located, an SSB index, and a position identifier of a radio frame where the SSB is located in its frame structure;

determining a frame header position of the frame structure where the SSB is located according to the target information;

performing downlink time synchronization according to the frame header position of the frame structure where the SSB is located.

In FIG. 19, a bus architecture may include any number of interconnected bus and bridge. Specifically, various circuits of one or more processors, which are represented by the processor 1910, and one or more memories, which are represented by the memory 1920, are linked together. The bus architecture may link various other circuits, such as a peripheral device, voltage regulator and a power management circuit together. These features are well known in this field; therefore, this disclosure does not make further description on these features. The bus interface provides an interface. The transceiver 1900 may be multiple elements, including a transmitter and a receiver and provide units, which communicate with other devices on the transmission medium, and the transmission medium includes wireless channels, wired channels, optical cables and other transmission medium. For different UEs, a user interface 1930 may be an interface that can be connected to external or internal devices. The connected devices include but are not limited to a small keyboard, a display, a speaker, a microphone, a joystick, etc.

The processor 1910 is responsible for managing the bus architecture and the normal processing. The memory 1920 may be used to store data used by the processor 1910 for performing operations.

Optionally, the processor 1910 may be a central processing unit (CPU), an application specific integrated circuit (ASIC), a field-programmable gate array (FPGA) or a complex programmable logic device (CPLD). The processor 1910 may also adopt multi-core architecture.

The processor 1910 calls the computer program stored in the memory to execute any of the methods provided by the embodiments of the present disclosure according to obtained executable instructions. The processor 1910 and the memory 1920 may also be arranged physically separately.

Optionally, the frame structure includes one or more consecutive radio frames.

Optionally, a frame structure identifier of the frame structure where the SSB is located is represented by SFN and/or PBCH information bits.

Optionally, the frame structure identifier of the frame structure where the SSB is located is represented by all bits of high k bits starting from the m-th least significant bit of the system frame number, or the frame structure identifier of the frame structure where the SSB is located is represented by partial bits of the high k bits and the PBCH information bits; then,

$$m = \log_2 \left\lceil \frac{T_{frame}}{10} \right\rceil + 1, \quad k = \log_2 \left\lceil \frac{N}{L \times \frac{T_{frame}}{T_{SSB}}} \right\rceil, \quad n = \log_2 \left\lceil L \right\rceil,$$

where $T_{frame}$ represents frame structure period; $N$ represents a total number of beam positions to be scanned; $L$ represents a maximum number of beam positions scanned by hopping beam within an SSB transmission cycle; $T_{SSB}$ represents SSB transmission cycle for beam hopping.

Optionally, the position identifier of the radio frame where the SSB is located in its frame structure is represented by one of the PBCH information bits and partial bits of the SFN;

or, the position of the radio frame where the SSB is located in its frame structure is identified by protocol agreement.

Optionally, the frame structure period is agreed upon by a protocol or indicated by PBCH information bit.

Optionally, the SSB maximum index value indicated by the PBCH information bit is the SSB maximum index value of the existing protocol or the SSB maximum index value supported under the extended beam position.

Optionally, the reserved bit in the MIB or the reserved bit in the PBCH payload indicates that the SSB number in the beam scanning cycle is the SSB index under the extended beam position, and the beam scanning cycle is K times the frame structure period.

Optionally, the PBCH information bit includes one or more of the following information:

reserved bit in the master information block MIB;
new bits in the MIB;
reserved bit in the PBCH payload;
new bits in the PBCH payload;
reconfiguration of an existing bit field in the PBCH payload.

Optionally, the processor 1910 is further configured to:

obtain beam hopping indication information, where the beam hopping indication information includes one or more of the following:
different frequency bands;
different bandwidth parts;
different cell identifiers;
reserved bit in the MIB;
new bits in MIB;
reserved bit in the PBCH payload;
new bits in the PBCH payload;
reconfiguration of an existing bit field in the PBCH payload.

The UE of the embodiment of the present disclosure receives SSB sent by a network device in a first beam direction within one or more consecutive radio frames; parses the information carried by PBCH in the SSB to obtain target information, where the target information includes SFN, an identifier of a half frame of the radio frame where the SSB is located, and an SSB index, or the target information includes SFN, an identifier of a half frame of the radio frame where the SSB is located, an SSB index, and an identifier of a position of the radio frame where the SSB is located in its frame structure; determines the frame header position of the frame structure where the SSB is located according to the target information; performs downlink time synchronization according to the frame header position of the frame structure where the SSB is located, thereby meeting the access requirements of satellite communication systems based on 5G, 5G-advanced and other communication systems.

As shown in FIG. 20, one embodiment of the present disclosure further provides an information transmission device, including:

a receiving unit 2001 used to receive a synchronization signal and PBCH blocks (SSB) sent by a network device, in a first beam direction within one or more consecutive radio frames;
a parsing unit 2002 used to parse information carried by physical broadcast channel (PBCH) in the SSB to obtain target information, where the target information includes system frame number (SFN), an identifier of a half frame of a radio frame where the SSB is located, and an SSB index, or the target information includes the system frame number (SFN), an identifier of a half frame of a radio frame where the SSB is located, an SSB index, and a position identifier of a radio frame where the SSB is located in its frame structure;
a first processing unit 2003 used to determine a frame header position of the frame structure where the SSB is located according to the target information;
a second processing unit 2004 used to perform downlink time synchronization according to the frame header position of the frame structure where the SSB is located.

Optionally, the frame structure includes one or more consecutive radio frames.

Optionally, a frame structure identifier of the frame structure where the SSB is located is represented by SFN and/or PBCH information bits.

Optionally, the frame structure identifier of the frame structure where the SSB is located is represented by all bits of high k bits starting from the m-th least significant bit of the system frame number, or the frame structure identifier of the frame structure where the SSB is located is represented by partial bits of the high k bits and the PBCH information bits; then,

$$m = \log_2 \left\lceil \frac{T_{frame}}{10} \right\rceil + 1, \quad k = \log_2 \left\lceil \frac{N}{L \times \frac{T_{frame}}{T_{SSB}}} \right\rceil, \quad n = \log_2 \left\lceil L \right\rceil,$$

where $T_{frame}$ represents frame structure period; $N$ represents a total number of beam positions to be scanned; $L$ represents a maximum number of beam positions scanned by hopping beam within an SSB transmission cycle; $T_{SSB}$ represents SSB transmission cycle for beam hopping.

Optionally, the position identifier of the radio frame where the SSB is located in its frame structure is represented by one of the PBCH information bits and partial bits of the SFN;

or, the position of the radio frame where the SSB is located in its frame structure is identified by protocol agreement.

Optionally, the frame structure period is agreed upon by a protocol or indicated by PBCH information bit.

Optionally, the SSB maximum index value indicated by the PBCH information bit is the SSB maximum index value of the existing protocol or the SSB maximum index value supported under the extended beam position.

Optionally, the reserved bit in the MIB or the reserved bit in the PBCH payload indicates that the SSB number in the beam scanning cycle is the SSB index under the extended beam position, and the beam scanning cycle is K times the frame structure period.

Optionally, the PBCH information bit includes one or more of the following information:

reserved bit in the master information block MIB;
new bits in the MIB;
reserved bit in the PBCH payload;
new bits in the PBCH payload;
reconfiguration of an existing bit field in the PBCH payload.

Optionally, the information transmission device of the embodiment of the present disclosure further includes:

an obtaining unit used to obtain beam hopping indication information, where the beam hopping indication information includes one or more of the following:
different frequency bands;
different bandwidth parts;
different cell identifiers;
reserved bit in the MIB;
new bits in MIB;
reserved bit in the PBCH payload;
new bits in the PBCH payload;
reconfiguration of an existing bit field in the PBCH payload.

The information transmission device of the embodiment of the present disclosure receives SSB sent by a network device in a first beam direction within one or more consecutive radio frames; parses the information carried by PBCH in the SSB to obtain target information, where the target information includes SFN, an identifier of a half frame of the radio frame where the SSB is located, and an SSB index, or the target information includes SFN, an identifier of a half frame of the radio frame where the SSB is located, an SSB index, and an identifier of a position of the radio frame where the SSB is located in its frame structure; determines the frame header position of the frame structure where the SSB is located according to the target information; performs downlink time synchronization according to the frame header position of the frame structure where the SSB is located, thereby meeting the access requirements of satellite communication systems based on 5G, 5G-advanced and other communication systems.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

One embodiment of the present disclosure further provides a processor-readable storage medium, which includes program instructions stored thereon. The computer program is used to cause a processor to perform:

receiving a synchronization signal and PBCH blocks (SSB) sent by a network device, in a first beam direction within one or more consecutive radio frames;
parsing information carried by physical broadcast channel (PBCH) in the SSB to obtain target information, where the target information includes system frame number (SFN), an identifier of a half frame of a radio frame where the SSB is located, and an SSB index, or the target information includes the system frame number (SFN), an identifier of a half frame of a radio frame where the SSB is located, an SSB index, and a position identifier of a radio frame where the SSB is located in its frame structure;
determining a frame header position of the frame structure where the SSB is located according to the target information;
performing downlink time synchronization according to the frame header position of the frame structure where the SSB is located.

When the program instructions are executed by the processor, all implementation methods of the method embodiment applied to the UE side as shown in FIG. 16 can be implemented, which will not be described here to avoid repetition.

The technical solutions provided in the embodiments of the present disclosure may be applicable to various systems, especially the fifth generation communication (5G) system. For example, applicable systems may be global system of mobile communication (GSM) system, code division multiple access (CDMA) system, wideband code division multiple access (WCDMA) general packet wireless service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. Each of the various systems includes a user equipment and a network device. The system may further include a core network part, such as an evolved packet system (EPS), a 5G system (5GS).

Terminal devices involved in the embodiments of the present disclosure may be a device that provides voice and/or data connectivity to a user, a handheld device with a wireless connection function, or other processing device coupled to a wireless modem. In different systems, names of terminal devices may be different. For example, in the 5G system, the terminal device may be referred as user equipment (UE). A wireless terminal device may communicate with one or more core networks (CN) via a radio access network (RAN). The wireless terminal device may be a mobile terminal device such as a mobile phone (or referred as cell phone), or a computer with a mobile terminal device, such as a portable, pocket-sized, handheld, computer built-in or vehicle-mounted mobile device, which exchange language and/or data with wireless access networks, for example, a personal communication service (PCS) phone, a cordless phone, a session initiated protocol (SIP) phone, a wireless local loop (WLL) station, a personal digital assistant (PDA) and other device. The wireless terminal device may also be referred to as system, subscriber unit, subscriber station, mobile station, mobile, remote station, access point, remote terminal, access terminal, user terminal, user agent, or user device, which are not limited in the embodiments of the present disclosure.

The network device involved in the embodiments of the present disclosure may be a base station, and the base station may include a plurality of cells for providing services for the terminal. According to different specific application scenarios, the base station may also be referred as an access point, or the base station may be a device in an access network that communicates with wireless terminal devices through one or more sectors on air interfaces, or other names.

The network device may be used to exchange received frames with internet protocol (IP) packets, and act as a router between the wireless terminal device and the rest of the access network, where the rest of the access network may include an internet protocol (IP) communication network. The network device may also coordinate attribute management for air interfaces. For example, the network device involved in the embodiments of the present disclosure may be a base transceiver station (BTS) in global system for mobile communications (GSM) or code division multiple access (CDMA), a NodeB in wideband code division multiple access (WCDMA), an evolutional Node B (eNB or e-NodeB) in long term evolution (LTE) system, a 5G base station (gNB) in the 5G network architecture (next generation system), a home evolved Node B (HeNB), a relay node, a femto, or a pico, which are not limited in the embodiments of the present disclosure. In some network structures, the network device may include a centralized unit (CU) node and a distributed unit (DU) node; and the centralized unit and the distributed unit may also be geographically separated.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing apparatus to create a machine, so that instructions executable by the processor of the computer or the other programmable data processing apparatus may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

**Claims**

1. An information transmission method, comprising:
   within a beam scanning cycle comprising one or more radio frames, sending, by a network device, a synchronization signal and PBCH block (SSB) in different beam directions; wherein an index of the SSB within the beam scanning cycle includes one or more combinations of partial bits of a system frame number of a radio frame where the SSB is located, a half-frame identifier of the radio frame where the SSB is located, an SSB index, and PBCH information bit.

2. The method according to claim 1, wherein within a beam scanning cycle comprising one or more radio frames, sending, by a network device, an SSB in different beam directions, includes:
   in the beam scanning cycle, sending, by the network device, SSBs, by using one or multiple hopping beams at different beam positions; wherein the beam positions represent beam directions of the hopping beams, and an SSB pattern for each hopping beam remains identical within each SSB transmission cycle.

3. The method according to claim 1, wherein the PBCH information bit includes one or more of the following information:

   reserved bit in a master information block (MIB);
   new bit in the MIB;
   reserved bit in a PBCH payload;
   new bit in the PBCH payload;
   reconfiguration of an existing bit field in the PBCH payload.

4. The method according to claim 2, wherein the beam scanning cycle comprises multiple frame structures, and the frame structure includes one or more consecutive radio frames;
   the frame structure identifier of the frame structure where the SSB is located is represented by at least one of partial bit of the system frame number of the radio frame where the SSB is located and the PBCH information bit.

5. The method according to claim 4, wherein the frame structure identifier of the frame structure where the SSB is located is represented by all bits of high k bits starting from an m-th least significant bit of the system frame number of the radio frame where the SSB is located, or the frame structure identifier of the frame structure where the SSB is located is represented by partial bits of the high k bits and the PBCH information bits; an identifier of the half frame of the radio frame where the SSB is located is represented by 1 bit, and the SSB index is represented by n bits; then,

$$m = \log_2 \left\lceil \frac{T_{frame}}{10} \right\rceil + 1, \quad k = \log_2 \left\lceil \frac{N}{L \times \dfrac{T_{frame}}{T_{SSB}}} \right\rceil, \quad n = \log_2 \left\lceil L \right\rceil,$$

where $T_{frame}$ represents frame structure period; $N$ represents a total number of beam positions to be scanned; $L$ represents a maximum number of beam positions scanned by hopping beam within an SSB transmission cycle; $T_{SSB}$ represents SSB transmission cycle for beam hopping.

6. The method according to claim 4, wherein one of the PBCH information bit, and partial bits of the system frame number of the radio frame where the SSB is located, is used to indicate a position of the radio frame where the SSB is located in the frame structure;
   or,
   the position of the radio frame where the SSB is located in the frame structure is agreed upon by a protocol.

7. The method according to claim 4, wherein the frame structure period is indicated by a protocol agreement or by the PBCH information bit.

8. The method according to claim 1, wherein a reserved bit in an MIB or a reserved bit in a PBCH payload indicates that the index of the SSB in the beam scanning cycle is an SSB index under extended beam position.

9. The method according to claim 1, wherein an SSB maximum index value indicated by the PBCH information bit is an SSB maximum index value of an existing protocol or an SSB maximum index value supported under extended beam position.

10. The method according to claim 4, wherein in case that one hopping beam is used to send SSBs at different beam positions within a frame structure, the hopping beam scans different beam positions in a time-division manner within a corresponding SSB transmission cycle.

11. The method according to claim 4, wherein in case that multiple beam-hopping beams are used to send SSB at different beam positions within a frame structure, the multiple beam-hopping partitions scan different beam positions in time-division manner within respective corresponding SSB transmission cycles.

12. The method according to claim 4 or 11, wherein the multiple hopping beams are indicated by one of the following:

    different frequency bands;

different bandwidth parts;
different cell identifiers;
reserved bit in the MIB;
new bit in MIB;
reserved bit in the PBCH payload;
new bit in the PBCH payload;
reconfiguration of an existing bit field in the PBCH payload.

13. The method according to claim 1, wherein bit information used for the index of the SSB within the beam scanning cycle is not scrambled during a first scrambling process.

14. The method according to claim 2, wherein a system frame number at which the hopping beam starts scanning in each beam scanning cycle meets a same condition.

15. The method according to claim 2, wherein the number of beam positions is indicated by a system information block SIB message.

16. An information transmission method, comprising:

receiving, by a user equipment (UE), a synchronization signal and PBCH block (SSB) sent by a network device, in a first beam direction within one or more consecutive radio frames;
parsing information carried by physical broadcast channel (PBCH) in the SSB to obtain target information;
wherein the target information includes system frame number (SFN), an identifier of a half frame of a radio frame where the SSB is located, and an SSB index, or the target information includes a system frame number (SFN), an identifier of a half frame of a radio frame where the SSB is located, an SSB index, and a position identifier of a radio frame where the SSB is located in its frame structure;
determining a frame header position of the frame structure where the SSB is located according to the target information;
performing downlink time synchronization according to the frame header position of the frame structure where the SSB is located.

17. The method according to claim 16, wherein the frame structure includes one or more consecutive radio frames.

18. The method according to claim 16, wherein a frame structure identifier of the frame structure where the SSB is located is represented by SFN and/or PBCH information bit.

19. The method according to claim 16, wherein the frame structure identifier of the frame structure where the SSB is located is represented by all bits of high k bits starting from an m-th least significant bit of the system frame number, or the frame structure identifier of the frame structure where the SSB is located is represented by partial bits of the high k bits and the PBCH information bit; then,

$$ m = \log_2 \left\lceil \frac{T_{frame}}{10} \right\rceil + 1, \quad k = \log_2 \left\lceil \frac{N}{L \times \frac{T_{frame}}{T_{SSB}}} \right\rceil, \quad n = \log_2 \left\lceil L \right\rceil, $$

where $T_{frame}$ represents frame structure period; $N$ represents a total number of beam positions to be scanned; $L$ represents a maximum number of beam positions scanned by hopping beam within an SSB transmission cycle; $T_{SSB}$ represents SSB transmission cycle for beam hopping.

20. The method according to claim 16, wherein the position identifier of the radio frame where the SSB is located in the frame structure is represented by one of the PBCH information bit and partial bits of the SFN;
or, the position identifier of the radio frame where the SSB is located in its frame structure is identified by protocol agreement.

21. The method according to claim 16, wherein the frame structure period is agreed upon by a protocol or indicated by PBCH information bit.

22. The method according to claim 16, wherein an SSB maximum index value indicated by the PBCH information bit is an SSB maximum index value of an existing protocol or an SSB maximum index value supported under extended beam position.

23. The method according to claim 16, wherein a reserved bit in an MIB or a reserved bit in a PBCH payload indicates that an index of the SSB in the beam scanning cycle is an SSB index under extended beam position.

24. The method according to any one of claims 18 to 22, wherein the PBCH information bit includes one or more of the following information:

   reserved bit in the MIB;
   new bit in the MIB;
   reserved bit in the PBCH payload;
   new bit in the PBCH payload;
   reconfiguration of an existing bit field in the PBCH payload.

25. The method according to claim 16, wherein the method further includes:
obtaining beam hopping indication information, wherein the beam hopping indication information includes one or more of the following:

   different frequency bands;
   different bandwidth parts;
   different cell identifiers;
   reserved bit in the MIB;
   new bit in the MIB;
   reserved bit in the PBCH payload;
   new bit in the PBCH payload;
   reconfiguration of an existing bit field in the PBCH payload.

26. A network device, comprising: a memory, a transceiver, and a processor; wherein the memory is used to store program instructions; the transceiver is used to send and receive data under the control of the processor; the processor is used to read the program instructions in the memory to execute the information transmission method according to any one of claims 1 to 15.

27. An information transmission device, comprising:
a sending unit used to, within a beam scanning cycle comprising one or more radio frames, send an SSB in different beam directions; wherein an index of the SSB within the beam scanning cycle includes one or more combinations of partial bits of a system frame number of a radio frame where the SSB is located, a half-frame identifier of the radio frame where the SSB is located, an SSB index, and PBCH information bit.

28. The device according to claim 27, wherein the sending unit is specifically used to:
in the beam scanning cycle, use by the network device, one or more hopping beams to send SSB at different beam positions, wherein the beam positions represent beam directions of the hopping beams, and an SSB pattern of the hopping beams in each SSB sending period is the same.

29. The device according to claim 27, wherein the PBCH information bit includes one or more of the following information:

   reserved bit in the MIB;
   new bit in the MIB;
   reserved bit in the PBCH payload;
   new bit in the PBCH payload;
   reconfiguration of an existing bit field in the PBCH payload.

30. The device according to claim 28, wherein the beam scanning cycle comprises multiple frame structures, and the frame structure includes one or more consecutive radio frames;

the frame structure identifier of the frame structure where the SSB is located is represented by at least one of partial bit of the system frame number of the radio frame where the SSB is located and PBCH information bit.

31. The device according to claim 30, wherein the frame structure identifier of the frame structure where the SSB is located is represented by all bits of high k bits starting from an m-th least significant bit of the system frame number of the radio frame where the SSB is located, or the frame structure identifier of the frame structure where the SSB is located is represented by partial bits of the high k bits and the PBCH information bits; an identifier of the half frame of the radio frame where the SSB is located is represented by 1 bit, and the SSB index is represented by n bits; then,

$$ m = \log_2 \left\lceil \frac{T_{frame}}{10} \right\rceil + 1, \quad k = \log_2 \left\lceil \frac{N}{L \times \frac{T_{frame}}{T_{SSB}}} \right\rceil, \quad n = \log_2 \left\lceil L \right\rceil, $$

where $T_{frame}$ represents frame structure period; $N$ represents a total number of beam positions to be scanned; $L$ represents a maximum number of beam positions scanned by hopping beam within an SSB transmission cycle; $T_{SSB}$ represents SSB transmission cycle for beam hopping.

32. The device according to claim 30, wherein one of the PBCH information bit, and partial bits of the system frame number of the radio frame where the SSB is located, is used to indicate a position of the radio frame where the SSB is located in the frame structure;
or,
the position of the radio frame where the SSB is located in the frame structure is agreed upon by a protocol

33. The device according to claim 30, wherein the frame structure period is indicated by a protocol agreement or by the PBCH information bit.

34. The device according to claim 27, wherein a reserved bit in an MIB or a reserved bit in a PBCH payload indicates that the index of the SSB in the beam scanning cycle is an SSB index under extended beam position.

35. The device according to claim 27, wherein an SSB maximum index value indicated by the PBCH information bit is an SSB maximum index value of an existing protocol or an SSB maximum index value supported under extended beam position.

36. The device according to claim 30, wherein in case that one hopping beam is used to send SSB at different beam positions within a frame structure, the hopping beam scans different beam positions in a time-division manner within a corresponding SSB transmission cycle.

37. The device according to claim 30, wherein in case that multiple beam-hopping beams are used to send SSB at different beam positions within a frame structure, the multiple beam-hopping partitions scan different beam positions in time-division manner within respective corresponding SSB transmission cycles.

38. The device according to claim 30 or 37, wherein the multiple hopping beams are indicated by one of the following:

   different frequency bands;
   different bandwidth parts;
   different cell identifiers;
   reserved bit in the MIB;
   new bit in MIB;
   reserved bit in the PBCH payload;
   new bit in the PBCH payload;
   reconfiguration of an existing bit field in the PBCH payload.

39. The device according to claim 27, wherein bit information used for the index of the SSB within the beam scanning cycle is not scrambled during a first scrambling process.

40. The device according to claim 28, wherein a system frame number at which the hopping beam starts scanning in each beam scanning cycle meets a same condition.

41. The device according to claim 28, wherein a quantity of beam positions is indicated by a system information block SIB message.

42. A user equipment (UE), comprising: a memory, a transceiver, and a processor; wherein the memory is used to store program instructions; the transceiver is used to send and receive data under the control of the processor; the processor is used to read the program instructions in the memory to execute the information transmission method according to any one of claims 16 to 25.

43. An information transmission device, comprising:

a receiving unit used to receive a synchronization signal and PBCH blocks (SSB) sent by a network device, in a first beam direction within one or more consecutive radio frames;
a parsing unit used to parse information carried by physical broadcast channel (PBCH) in the SSB to obtain target information; wherein the target information includes system frame number (SFN), an identifier of a half frame of a radio frame where the SSB is located, and an SSB index, or the target information includes a system frame number (SFN), an identifier of a half frame of a radio frame where the SSB is located, an SSB index, and a position identifier of a radio frame where the SSB is located in its frame structure;
a first processing unit used to determine a frame header position of the frame structure where the SSB is located according to the target information;
a second processing unit used to perform downlink time synchronization according to the frame header position of the frame structure where the SSB is located.

44. The device according to claim 43, wherein the frame structure includes one or more consecutive radio frames.

45. The device according to claim 43, wherein a frame structure identifier of the frame structure where the SSB is located is represented by SFN and/or PBCH information bit.

46. The device according to claim 43, wherein the frame structure identifier of the frame structure where the SSB is located is represented by all bits of high k bits starting from an m-th least significant bit of the system frame number, or the frame structure identifier of the frame structure where the SSB is located is represented by partial bits of the high k bits and the PBCH information bit; then,

$$m = \log_2 \left\lceil \frac{T_{frame}}{10} \right\rceil + 1, \quad k = \log_2 \left\lceil \frac{N}{L \times \frac{T_{frame}}{T_{SSB}}} \right\rceil, \quad n = \log_2 \left\lceil L \right\rceil,$$

where $T_{frame}$ represents frame structure period; $N$ represents a total number of beam positions to be scanned; $L$ represents a maximum number of beam positions scanned by hopping beam within an SSB transmission cycle; $T_{SSB}$ represents SSB transmission cycle for beam hopping.

47. The device according to claim 43, wherein the position identifier of the radio frame where the SSB is located in the frame structure is represented by one of the PBCH information bit and partial bits of the SFN;
or, the position identifier of the radio frame where the SSB is located in its frame structure is identified by protocol agreement.

48. The device according to claim 43, wherein the frame structure period is agreed upon by a protocol or indicated by PBCH information bit.

49. The device according to claim 43, wherein an SSB maximum index value indicated by the PBCH information bit is an SSB maximum index value of an existing protocol or an SSB maximum index value supported under extended beam position.

50. The device according to claim 43, wherein a reserved bit in an MIB or a reserved bit in a PBCH payload indicates that an index of the SSB in the beam scanning cycle is an SSB index under extended beam position.

51. The device according to any one of claims 45 to 49, wherein the PBCH information bit includes one or more of the following information:

reserved bit in the MIB;
new bit in the MIB;
reserved bit in the PBCH payload;
new bit in the PBCH payload;
reconfiguration of an existing bit field in the PBCH payload.

52. The device according to claim 43, wherein the device further includes:
an obtaining unit used to obtain beam hopping indication information, wherein the beam hopping indication information includes one or more of the following:

different frequency bands;
different bandwidth parts;
different cell identifiers;
reserved bit in the MIB;
new bit in the MIB;
reserved bit in the PBCH payload;
new bit in the PBCH payload;
reconfiguration of an existing bit field in the PBCH payload.

53. A processor-readable storage medium, comprising a computer program stored thereon; wherein the computer program is used to cause a processor to execute the information transmission method according to any one of claims 1 to 15, or the information transmission method according to any one of claims 16 to 25.

**FIG. 1**

FIG. 2

within a beam scanning cycle composed of one or more radio frames, sending, by the network device, an SSB in different beam directions; where an index of the SSB within the beam scanning cycle includes one or more combinations of partial bits of a system frame number of a radio frame where the SSB is located, a half-frame identifier of the radio frame where the SSB is located, an SSB index, and PBCH information bit

301

**FIG. 3**

movement direction of satellite

**FIG. 4**

FIG. 5

frame period, 10ms

radio frame, 10ms

half-frame 5 ms

subframe, 1 ms

| | | | subframe2 | subframe3 | subframe4 | | | ...... | subframe8 | subframe9 |

subframe0  subframe1  subframe5  subframe6

8+14n

2+14n

slot n=0

slot n=1

8+14n

2+14n

slot n=0

slot n=1

| 0 | 1 | 2 | 3 | 4 | 5 | 6 | 7 | 8 | 9 | 1 0 | 1 1 | 1 2 | 1 3 | 0 | 1 | 2 | 3 | 4 | 5 | 6 | 7 | 8 | 9 | 1 0 | 1 1 | 1 2 | 1 3 |

SSB0 beam position 0

SSB1 beam position 1

SSB2 beam position 2

SSB3 beam position 3

| 0 | 1 | 2 | 3 | 4 | 5 | 6 | 7 | 8 | 9 | 1 0 | 1 1 | 1 2 | 1 3 | 0 | 1 | 2 | 3 | 4 | 5 | 6 | 7 | 8 | 9 | 1 0 | 1 1 | 1 2 | 1 3 |

SSB0 beam position 4

SSB1 beam position 5

SSB2 beam position 6

SSB3 beam position 7

**FIG. 6**

EP 4 629 542 A1

beam position index
(SSBindexé )

MSB                                                           LSB

| lower 3 bits of SFN | 1bit half-frame identifier | 2bit source SSB index |
|---|---|---|

**FIG. 7**

FIG. 8

frame period, 20ms

radio frame, 10ms

half-frame 5 ms

subframe, 1 ms

| subframe0 | subframe 1 | subframe 2 | subframe 3 | subframe 4 | subframe 5 | ...... | subframe 8 | subframe 9 |

sloe

$8+14n$

$2+14n$

slot $n=0$

slot $n=1$

| 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

SSB0  SSB1  SSB2  SSB3

**FIG. 9**

EP 4 629 542 A1

MSB         LSB

SFN | 9 | 8 | 7 | 6 | 5 | 4 | 3 | 2 | 1 | 0 |

indicate position of radio frame
containing SSB within frame structure

MSB        LSB

SSBindexé | 4bit of SFN | 2bit source SSB index |

**FIG. 10**

FIG. 11

MSB                                    LSB

SFN    | 9 | 8 | 7 | 6 | 5 | 4 | 3 | 2 | 1 | 0 |

MSB                          LSB

beam position index
(SSBindex')     | lower 4 bits of SFN | 3bit source SSB index |

**FIG. 12**

MSB                          LSB

SFN    | 9 | 8 | 7 | 6 | 5 | 4 | 3 | 2 | 1 | 0 |

MSB                                              LSB

beam position index
(SSBindex')     | lower 2 bits of SFN | PBCH payload 2bit | 3bit source SSB index |

**FIG. 13**

FIG. 14

MSB        LSB

SFN | 9 | 8 | 7 | 6 | 5 | 4 | 3 | 2 | 1 | 0 |

indicate position of radio frame
containing SSB within frame structure

extended beam
index
(SSBindexé )

MSB         LSB

| 4bit of SFN | 3bit source SSB index |

**FIG. 15**

receiving, by the UE, a synchronization signal and PBCH blocks (SSB) sent by a network
device, in a first beam direction within one or more consecutive radio frames  1601

parsing information carried by physical broadcast channel (PBCH) in the SSB to obtain
target information, where the target information includes system frame number (SFN), an
identifier of a half frame of a radio frame where the SSB is located, and an SSB index, or the
target information includes the system frame number (SFN), an identifier of a half frame of a
radio frame where the SSB is located, an SSB index, and a position identifier of a radio
frame where the SSB is located in its frame structure  1602

determining a frame header position of the frame structure where the SSB is located
according to the target information  1603

performing downlink time synchronization according to the frame header position of the
frame structure where the SSB is located  1604

**FIG. 16**

1710

| processor |

1720

| memory |

| bus interface |

1700

| transceiver |

**FIG. 17**

sending unit ———1801

**FIG. 18**

processor ——1910

bus interface

memory ——1920

transceiver ——1900

user interface ——1930

**FIG. 19**

receiving unit ——2001

parsing unit ——2002

second processing unit ——2003

second processing unit ——2004

**FIG. 20**

## INTERNATIONAL SEARCH REPORT

| International application No. |
|---|
| **PCT/CN2023/130642** |

| A. | CLASSIFICATION OF SUBJECT MATTER |
|---|---|
| | H04L 5/00(2006.01)i |

According to International Patent Classification (IPC) or to both national classification and IPC

| B. | FIELDS SEARCHED |
|---|---|

Minimum documentation searched (classification system followed by classification symbols)

IPC：H04L

Documentation searched other than minimum documentation to the extent that such documents are included in the fields searched

Electronic data base consulted during the international search (name of data base and, where practicable, search terms used)

3GPP, CNTXT, ENTXTC, ENTXT, DWPI: 无线帧, 扫描, 周期, 波束, 方向, 同步信号块, 编号, 标号, 序号, 序列号, 系统帧, 半帧, 索引, 物理广播信道; frame, sweeping, beam, direction, SSB, number, ID, index, SFN, PBCH

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113766648 A (DATANG MOBILE COMMUNICATIONS EQUIPMENT CO., LTD.) 07 December 2021 (2021-12-07)<br>description, paragraphs [0159]-[0604], and figure 9 | 1-53 |
| A | CN 113557771 A (OPPO GUANGDONG MOBILE TELECOMMUNICATIONS CO., LTD.) 26 October 2021 (2021-10-26)<br>entire document | 1-53 |
| A | CN 114630428 A (BEIJING JIUTIAN WEIXING TECHNOLOGY DEVELOPMENT CO., LTD.) 14 June 2022 (2022-06-14)<br>entire document | 1-53 |
| A | US 2021335354 A1 (LG ELECTRONICS INC.) 28 October 2021 (2021-10-28)<br>entire document | 1-53 |
| A | OPPO. "Discussion on multicast reception in RRC_INACTIVE state"<br>*3GPP TSG-RAN WG2 Meeting #120 R2-2211299*, 18 November 2022 (2022-11-18),<br>entire document | 1-53 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 January 2024** | **18 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/130642**

| Patent document cited in search report | | | Publication date (day/month/year) | Patent family member(s) | | | Publication date (day/month/year) |
|---|---|---|---|---|---|---|---|
| CN | 113766648 | A | 07 December 2021 | None | | | |
| CN | 113557771 | A | 26 October 2021 | WO | 2021051306 | A1 | 25 March 2021 |
| CN | 114630428 | A | 14 June 2022 | None | | | |
| US | 2021335354 | A1 | 28 October 2021 | KR | 20210143953 | A | 30 November 2021 |
| | | | | WO | 2020213767 | A1 | 22 October 2020 |

Form PCT/ISA/210 (patent family annex) (July 2022)

46

**EP 4 629 542 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211544398

- CN 202310037732